# EUROPEAN PATENT SPECIFICATION

(11) **EP 4 735 976 B1**
(45) Date of publication and mention of the grant of the patent: **30.09.2026**
(21) Application number: 23736644.8
(22) Date of filing: 28.06.2023
(51) Int. Cl.: G06F 3/01

(54) **COMBINING ELECTRONIC DEVICE FUNCTIONALITY FOR USER INTERACTION IN VIRTUAL PORTAL SPACE OF EXTENDED REALITY ENVIRONMENT**
KOMBINATION DER FUNKTIONALITÄT EINER ELEKTRONISCHEN VORRICHTUNG ZUR BENUTZERINTERAKTION IN EINEM VIRTUELLEN PORTALRAUM EINER UMGEBUNG DER ERWEITERTEN REALITÄT
COMBINAISON DE FONCTIONNALITÉ DE DISPOSITIF ÉLECTRONIQUE POUR UNE INTERACTION D'UTILISATEUR DANS UN ESPACE DE PORTAIL VIRTUEL D'UN ENVIRONNEMENT DE RÉALITÉ ÉTENDUE

(43) Date of publication of application: 06.05.2026
(73) Proprietor: Telefonaktiebolaget LM Ericsson (publ), 164 83 Stockholm (SE)
(72) Inventor: LINDSKOG, Niklas, 224 72 LUND (SE); ARNGREN, Tommy, 954 42 SÖDRA SUNDERBYN (SE); ÖKVIST, Peter, 973 41 LULEÅ (SE)
(74) Representative: Ericsson
(86) International application number: PCT/EP2023/067624
(87) International publication number: WO 2025/002548

(56) References cited:
- US-A1- 2013 207 963
- US-A1- 2018 063 205
- US-A1- 2022 070 238

## Description

### TECHNICAL FIELD

The present disclosure relates to rendering extended reality (XR) environments and associated XR rendering devices, and more particularly to rendering objects in immersive XR environments for display on XR participant devices.

### BACKGROUND

Immersive extended reality (XR) environments have been developed which provide a myriad of different types of user experiences for gaming, on-line meetings, co-creation of products, etc. One type of immersive XR environments (also referred to as "XR environments") is virtual reality (VR) environments where human users only see computer-generated graphical renderings. Another type of XR environment is augmented reality (AR) environments where users see a combination of computer-generated graphical renderings overlaid on a view of the physical real-world through, e.g., see-through display screens.

Example XR environment rendering devices include, without limitation, XR environment servers, XR headsets, gaming consoles, smartphones running an XR application, and tablet/laptop/desktop computers running an XR application. Oculus Quest is an example VR device with AR functionality and Google Glass is an example AR device.

Users can interact with virtual objects that are rendered in some immersive XR environments, such as by controlling a user's avatar to manipulate virtual objects. Immersive XR environments presently support little if any interface between physical objects and virtual objects that are rendered.

Prior art concepts are disclosed in US 2018/063205 A1, US 2013/207963 A1 and US 2022/070238 A1

### SUMMARY

Some embodiments disclosed herein are directed to an XR rendering device for rendering an immersive XR environment on display devices for viewing by first and second participants in the immersive XR environment. The XR rendering device includes at least one processor and at least one memory storing instructions executable by the at least one processor to perform operations. The operations include to determine a combined set of operational functions based on a first set of operational functions of a first physical electronic device in a first virtual portal space of the immersive XR environment and based on a second set of operational functions of a second physical electronic device in the first virtual portal space or a second virtual portal space of the immersive XR environment. Based on determining a rule has become satisfied for generating a combined virtual electronic device, the operations generate a rendering of the combined virtual electronic device in the immersive XR environment, wherein the rendering of the combined virtual electronic device comprises a combined virtual user interface (VUI) with a combined set of VUI elements that the first participant can interact with in the first virtual portal space to control operational functions of the combined set and/or the second participant can interact with in the second virtual portal space to control operational functions of the combined set Operations generate a mapping between the operational functions of the combined set and the VUI elements of the combined set. Operations identify a characteristic of an interaction of the second participant with a first VUI element of the combined set, and identify based on the mapping which at least one of the operational functions of the combined set is mapped to the first VUI element. Based on the characteristic of the interaction of the second participant with the first VUI element of the combined set and based on the identified at least one of the operational functions of the combined set, control at least one of the operational functions of the first set of operational functions of the first physical electronic device corresponding to the identified at least one the operational functions of the combined set and/or control at least one operational function of the second set of the second physical electronic device corresponding to the identified at least one the operational functions of the combined set.

In some further embodiments, the instructions executable by the at least one processor further perform operations to define the first virtual portal space at a location in physical space of the first participant, and track a location of the first physical electronic device relative to the location of the first virtual portal space. Operations define the second virtual portal space at a location in physical space of the second participart, and track a location of the second physical electronic device relative to the location of the second virtual portal space. Based on determining the first physical electronic device is inside the first virtual portal space, operations render a first virtual electronic device representation in the immersive XR environment of at least a portion of the first physical electronic device. The rendering of the first virtual electronic device includes a first VUI with a first set of VUI elements that the second participant can interact with in the second virtual portal space of the immersive XR environment to control the first set of operational functions of the first physical electronic device. Based on determining the second physical electronic device is inside the second virtual portal space, operations render a second virtual electronic device representation in the immersive XR environment of at least a portion of the second physical electronic device. The rendering of the second virtual electronic device includes a second VUI with a second set of VUI elements that the first participant can interact with in the first virtual portal space of the immersive XR environment to control the second set of operational functions of the second physical electronic device.

Some other embodiments are directed to a corresponding method performed by an XR rendering device for rendering an immersive XR environment on display devices for viewing by first and second participants in the immersive XR environment. The method includes determining a combined set of operational functions based on a first set of operational functions of a first physical electronic device in a first virtual portal space of the immersive XR environment and based on a second set of operational functions of a second physical electronic device in the first virtual portal space or a second virtual portal space of the immersive XR environment. Based on determining a rule has become satisfied for generating a combined virtual electronic device, the method further includes generating a rendering of the combined virtual electronic device in the immersive XR environment, wherein the rendering of the combined virtual electronic device comprises a combined VUI with a combined set of VUI elements that the first participant can interact with in the first virtual portal space to control operational functions of the combined set and/or the second participant can interact with in the second virtual portal space to control operational functions of the combined set. The method further includes generating a mapping between the operational functions of the combined set and the VUI elements of the combined set, and identifying a characteristic of an interaction of the second participant with a first VUI element of the combined set. The method further includes identifying based on the mapping which at least one of the operational functions of the combined set is mapped to the first VUI element. Based on the characteristic of the interaction of the second participant with the first VUI element of the combined set and based on the identified at least one of the operational functions of the combined set, the method controls at least one of the operational functions of the first set of operational functions of the first physical electronic device corresponding to the identified at least one the operational functions of the combined set and/or controls at least one operational function of the second set of the second physical electronic device corresponding to the identified at least one the operational functions of the combined set.

Some not claimed other embodiments are directed to a corresponding computer program product including a non-transitory computer readable medium storing instructions executable by at least one processor of XR rendering device rendering an immersive XR environment on display devices for viewing by first and second participants in the immersive XR environment. The instructions executed by the at least one processor perform operations include to determine a combined set of operational functions based on a first set of operational functions of a first physical electronic device in a first virtual portal space of the immersive XR environment and based on a second set of operational functions of a second physical electronic device in the first virtual portal space or a second virtual portal space of the immersive XR environment. Based on determining a rule has become satisfied for generating a combined virtual electronic device, the operations generate a rendering of the combined virtual electronic device in the immersive XR environment, wherein the rendering of the combined virtual electronic device comprises a combined VUI with a combined set of VUI elements that the first participant can interact with in the first virtual portal space to control operational functions of the combined set and/or the second participant can interact with in the second virtual portal space to control operational functions of the combined set. Operations generate a mapping between the operational functions of the combined set and the VUI elements of the combined set. Operations identify a characteristic of an interaction of the second participant with a first VUI element of the combined set, and identify based on the mapping which at least one of the operational functions of the combined set is mapped to the first VUI element. Based on the characteristic of the interaction of the second participant with the first VUI element of the combined set and based on the identified at least one of the operational functions of the combined set, operations control at least one of the operational functions of the first set of operational functions of the first physical electronic device corresponding to the identified at least one the operational functions of the combined set and/or control at least one operational function of the second set of the second physical electronic device corresponding to the identified at least one the operational functions of the combined set.

Potential advantages that may be provided by one or more of these embodiments can include that participants in immersive XR environments are able to view and interact with virtual representation renderings of the operational functionality provided by a combination of two or more physical electronic device. Participants are thereby not limited to interacting with separately virtual representations of physical electronic devices, but instead are provided a combined user interface that mapped to a combination of operational functionality residing in two or more physical electronic devices. Moreover, as will be explained in further detail below, the combined user interface and mapped combination of operational functions can include new operational functions which do not reside in any of physical electronic devices individually, but which instead is created by combining individual functions residing on two or more different electronic devices into the new operational function. Virtualizing a combination of two or more physical electronic devices into a single virtual device can provide a more easily displayable rendering and provide participants with more effective and intuitive ways of interacting with the combined virtual device to control the two or more physical devices.

The scope of the invention is defined by the accompanying claims.

### BRIEF DESCRIPTION OF THE DRAWINGS

Aspects of the present disclosure are illustrated by way of example and are not limited by the accompanying drawings. In the drawings:
Figure 1 illustrates an XR system that includes a physical electronic device and a plurality of participant devices that communicate through networks with an XR rendering device to operate in accordance with some embodiments of the present disclosure;
Figure 2 illustrates the XR rendering device tracking location of a physical object in the first participant's physical space while the physical object is being passed through a virtual portal and being rendered in the virtual space of the immersive XR environment, in accordance with some embodiments of the present disclosure;
Figure 3 illustrates an alternative example operation of the XR rendering device of Figure 2 with a virtual user interface being projected from the virtual electronic device in the virtual space of the immersive XR environment, in accordance with some embodiments of the present disclosure;
Figure 4 illustrates an example virtual portal with a virtual user interface (UI) displaying the content of the UI of a physical smartphone, in accordance with some embodiments of the present disclosure;
Figure 5 illustrates a flowchart of operations that can be performed by an XR rendering device in accordance with some embodiments of the present disclosure;
Figure 6 illustrates a block diagram of components of an XR rendering device that are configured to operate in accordance with some embodiments of the present disclosure;
Figure 7 illustrates a block diagram of components of an electronic device that are configured to operate in accordance with some embodiments of the present disclosure;
Figure 8a illustrates the XR rendering device tracking location of a first physical electronic device in the first participant's physical space while being passed through a virtual portal and being rendered with a first virtual user interface in the virtual portal space of the immersive XR environment for interaction with by a second participant, in accordance with some embodiments of the present disclosure;
Figure 8b illustrates the XR rendering device tracking location of a second physical electronic device in the second participant's physical space while being passed through a virtual portal and being rendered with a second virtual user interface in the virtual portal space of the immersive XR environment for interaction with by the first participant, in accordance with some embodiments of the present disclosure;
Figure 9 illustrates the XR rendering device rendering the virtual user interfaces of the first electronic device and the second electronic device, and further rendering a combined virtual electronic device with a combined virtual user interface, in accordance with some embodiments of the present disclosure; and
Figures 10 and 11 illustrate flowcharts of operations that can be performed by an XR rendering device to render a combined virtual electronic device and control operational functions of the physical electronic devices represented by the combined virtual electronic device, in accordance with some embodiments of the present disclosure.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of various present inventive concepts as set out in the appended claims.

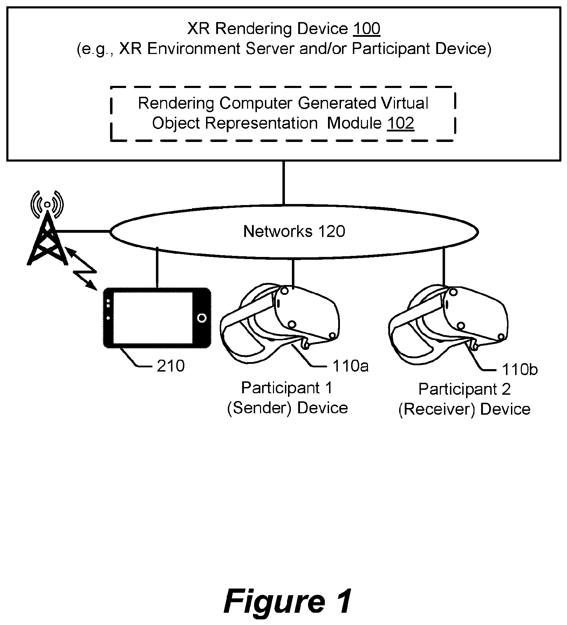

Figure 1 illustrates an XR system that includes a physical electronic device 210 and a plurality of participant devices 110a and 110b that communicate through networks 120 with an XR rendering device 100 to operate in accordance with some embodiments of the present disclosure. The XR rendering device 100 is configured to generate a graphical representation of an immersive XR environment (also called an "XR environment" for brevity) with a rendering computer-generated virtual object representation module 102 which is viewable from various perspectives of virtual poses of human participants in the XR environment through display screens of the various participant devices 110a-b and/or a physical electronic device 210.

For example, the illustrated devices of Figure 1 include XR headsets 110a and 110b which can be worn by participants to view and navigate through the XR environment. The participant devices are not limited to XR headsets, as they could be a personal computer, tablet computers, smartphone, or other electronic device which can be operated by a participant to view and navigate through the XR environment. The participants may have associated avatars which are rendered in the XR environment to represent poses (e.g., location, body assembly orientation, etc.) of the participants relative to a coordinate system of the XR environment.

A physical electronic device 210, also called "physical object" and "electronic device," has electronic operation(s) which can be controlled through a user interface. The physical electronic device 210 can be any type of electronic device that has a user interface. Non-limiting examples of physical electronic devices include smartphones, tablet computers, laptop computers, smart watches, gaming devices, smart appliances, etc. Non-limiting examples of user interfaces include touch screens and other display devices that can display user selectable indicia and/or user selectable menus, and physical buttons, touch sensor interfaces, etc.

As will be explained in further detail below, a representation of the physical electronic device 210 is rendered in the XR environment as a virtual electronic device with a virtual representation of a user interface of the physical electronic device 210. A participant in the XR environment can interact with the virtual user interface in order to control various electronic operational function(s) of the physical electronic device 210.

Although the XR rendering device 100 is illustrated in Figure 1 as being a centralized network computing server separate from one or more of the participant devices, in some other embodiments the XR rendering device 100 is implemented as a component of one or more of the participant devices. For example, one of the participant devices may be configured to perform operations of the XR rendering device in a centralized manner controlling rendering for or by other ones of the participant devices. Alternatively, each of the participant devices may be configured to perform at least some of the operations of the XR rendering device in a distributed decentralized manner with coordinated communications being performed between the distributed XR rendering devices (e.g., between software instances of XR rendering devices).

Some embodiments of the present disclosure are directed to an XR rendering device enabling one or more participants in an immersive XR environment to pass a physical electronic device through one or more virtual portals located in physical space, to trigger the XR rendering device 100 to render a virtual electronic device representing the physical electronic device in the immersive XR environment. In an illustrative example, a first participant may reach a first smartphone through a first virtual portal, into a virtual portal space, to trigger to the XR rendering device 100 to render a computer-generated virtual representation of the first smartphone in the immersive XR environment. The first participant and another second participant may simultaneously view the first virtual smartphone. The second participant may interact with the first virtual smartphone held by the first participant. In a similar manner, the second participant may reach a second smartphone through a virtual portal to trigger rendering of a second virtual smartphone in the virtual space of the first participant, which enables the first participant to interact with the second virtual smartphone. The first and second participant may be provided corresponding feedback of the virtual interaction by each other with the virtual smartphones, e.g., as tactile feedback initiated by the XR rendering device 100 and provided through a tactile device, such as gloves or smart fabric, worn by the first and second participants. As will be appreciated in view of the description provided below, the type of physical electronic device that can be passed through a virtual portal for rendering and possible interaction with by participants in the immersive XR environment is not limited to any of the example electronic devices described herein.

In accordance with various further embodiments of the present disclosure, responsive to determining the smartphone has entered the virtual portal, operations render a virtual electronic device representation in the immersive XR environment of at least a portion of the smartphone, where the rendering of the virtual electronic device include a virtual user interface that the other participant can interact with in the immersive XR environment. The operations identify a characteristic of an interaction of the other participant with the virtual user interface of the virtual electronic device, and communicate with the smartphone to control an operational function of the smartphone based on the identified characteristic of the interaction.

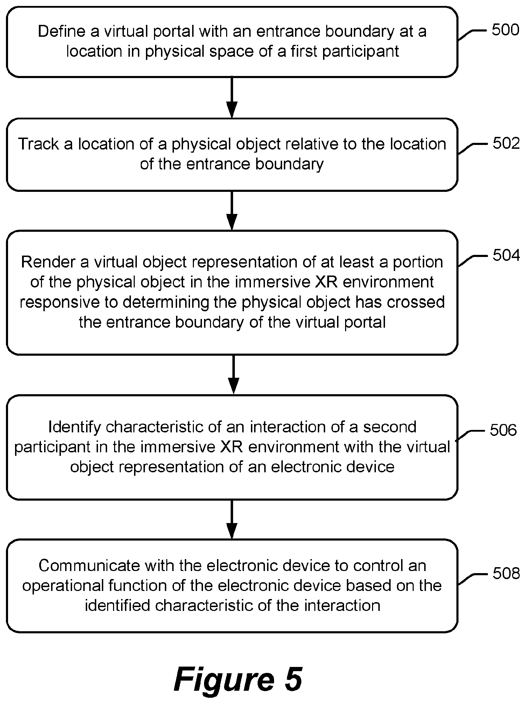

Figure 5 is a flowchart of operations that can be performed by an XR rendering device in accordance with some embodiments of the present disclosure.

Referring to Figures 1 and 5, an XR rendering device 100 is provided for rendering an immersive XR environment on a display device for viewing by a participant among a group of participants in the immersive XR environment. The XR rendering device includes processing circuitry adapted to perform operations. The operations include to define 500 a virtual portal with an entrance boundary at a location in physical space of a first participant. The operations track 502 a location of a physical object relative to the location of the entrance boundary. The operations render 504 a virtual electronic device representation in the immersive XR environment of at least a portion of the physical electronic device 210, where the rendering of the virtual electronic device includes a virtual user interface that a second participant can interact with in the immersive XR environment responsive to determining the physical electronic device 210 has entered the virtual portal. The operations identify 506 a characteristic of an interaction or participant with the virtual user interface of the virtual electronic device. The operations also communicate 508 with the physical electronic device 210 to control an operational function of the physical electronic device 210 based on the identified characteristic of the interaction.

The XR rendering device 100 may be a single computing device or may be a distributed system of computing devices, e.g., computer servers, connected via one or more networks, such as a cloud computing environment. A non-limiting example of a XR rendering device is the cloud computing environment provided by Oculus which includes numerous networked computing devices which host VR gaming environments serving Oculus VR headsets worn by remote users.

The second participant can interact with the virtual user interface in the immersive XR environment by, e.g., controlling an avatar representing the second participant and/or through computer-tracking of the second participant's physical hand or other object interacting with the virtual user interface of the virtual electronic device.

The rendering of the virtual object may be provided to a device of the participant and/or one or more other participants for viewing and possible interaction with. XR headsets can be worn by participants in the immersive XR environment to provide an intuitive way for the participants to view the rendered virtual object and possibly also view a rendering of the virtual portal.

Some potential advantages of these embodiments are that they enable participants in virtual meetings to control operational function(s) of physical electronic devices which have entered a virtual portal by interacting with a virtual user interface in the XR environment in an intuitive manner. As will be explained in further detail below, what operational function(s) and interactions are allowed to be controlled and/or interacted with may be constrained by access rules and/or recipient-sender trust relations.

Although various embodiments are described in the context of a participant interacting with a virtual electronic device to control operation of a physical electronic device while the physical electronic device remains in the virtual portal space (also "virtual space"), in some other embodiments the participant may continue to view and interact with the virtual electronic device to control operation of the physical electronic device after the physical electronic device has been removed from the virtual space. Whether a virtual electronic device remains rendered on a display and accessible to a participant for interaction after the physical electronic device has been removed from the virtual space, and how long such interaction is permitted and what operational functionality of the physical electronic device is allowed to be controlled, can depend on access rules and/or recipient-sender trust relations.

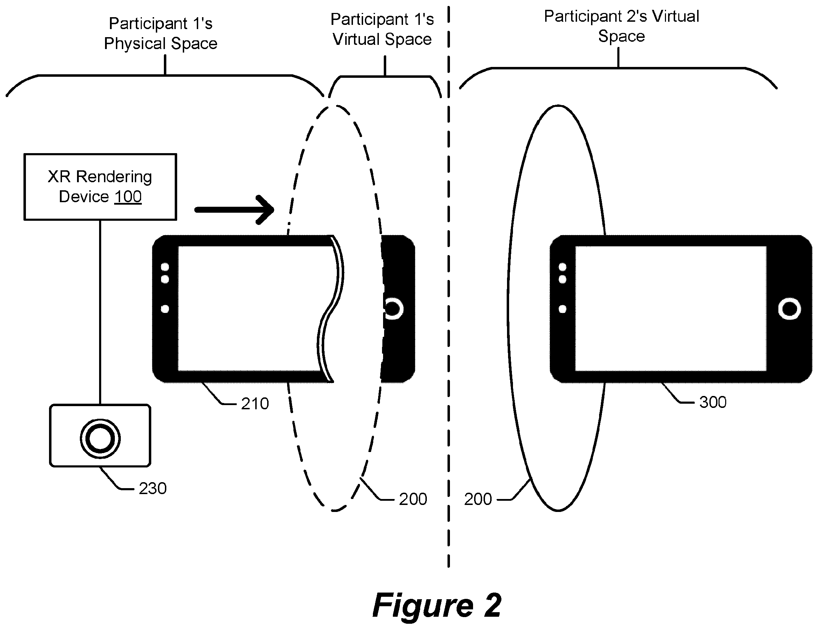

Figure 2 is an example illustration of the XR rendering device 100 tracking location of a physical electronic device 210 in the first participant's physical space while the physical electronic device 210 is being passed through a virtual portal 200 and rendered in the virtual space of the immersive XR environment, in accordance with some embodiments of the present disclosure. Referring to Figure 2, Participant 1 and Participant 2 can be present participants in an immersive XR environment rendered by the XR rendering device 100. Participant 1 and Participant 2 can simultaneously view virtual objects that are rendered by the XR rendering device 100 in their respective virtual spaces, such as through XR headsets worn by the participants. The XR rendering device 100 is communicatively coupled to at least one sensor 230 that tracks location of a physical electronic device 210, e.g., a smartphone, relative to the boundary of a virtual portal 200 having a location defined in physical space and/or relative to a pose (2D or 3D location and/or angular orientation, such as 3 axial directions and 3 rotational angles about axes) within the virtual portal space (virtual space). The sensor 230 may be one or more cameras mounted to an XR headset and facing forward in the wearer's eye gaze direction, or may be separate from the XR headset. The sensor 230 may additionally or alternatively be other types of sensors able to track location of physical objects, such as LIDAR sensors, ultrasound sensors, etc. In some embodiments, two cameras may be used to track the location of the physical electronic device 210 in three-dimensional (3D) space or a single LIDAR sensor may be used. LIDAR and one or more cameras may be used together to track and determine location, shape, texture, temperature, tactile notification, and color of the physical electronic device 210. Alternatively or additionally, the XR headset or other device transported by a participant may contain a sensor(s) that can track pose, such as an inertial measurement unit (e.g., multi-axis accelerometers), and report the pose (e.g., location, angular orientation, etc.) to the XR rendering device 100.

In some embodiments, the XR rendering device 100 defines a location, size, and shape of an entrance boundary of virtual portal 200 and/or the virtual portal space ("virtual space"). The location of the entrance boundary of virtual portal 200 is defined in physical space, such as relative to a feature on a physical table in a room, a distance away from Participant 1, relative to an object worn by Participant 1 (smartwatch, smart glasses, etc.), etc. A computer-generated representation of the virtual portal 200 may be displayed in the immersive XR environment in the virtual space viewed by Participant 1. The computer-generated representation of the virtual portal 200 may additionally or alternatively be displayed in the in the virtual space viewed by Participant 2, such as when Participants 1 and 2 are sharing an immersive XR environment.

The term virtual space is used herein to refer to the displayable space within the computer rendered immersive XR environment. In contrast, physical space is used to refer to the real space in which the human participant resides.

In some embodiments, the XR rendering device 100 defines a location of an entrance boundary of the virtual portal 200 relative to a reference system in physical space where the participant resides and which is tracked by one or more sensors 230. The entrance boundary may be a single point, may extend along a two-dimensional (2D) plane (e.g., flat rectangle or flat circle), such as illustrated in Figure 2, or extend in a three-dimensional (3D) shape (e.g., sphere or box). The entrance boundary may be defined to be a fixed distance and/or a fixed angle (fixed pose offset) relative to the participant or relative to a defined physical object which is in the physical space. The participant and/or the defined physical object may move within the physical space, and the entrance boundary location in the reference system of physical space may be dynamically updated to track changes in location of the participant and/or the defined physical electronic device 210.

In some embodiments, the physical object includes an electronic device having operational functionality that is controllable by a user interface. The operations identify a characteristic of an interaction of the second participant, e.g., via an avatar representing the second participant, in the immersive XR environment with the virtual user interface of the virtual electronic device. The operations communicate with the electronic device to control an operational function of the electronic device based on the identified characteristic of the interaction.

Some further embodiments are now described in the context of the example above where Participant 1 has passed a physical smartphone across the entrance boundary of the virtual portal, which has triggered the XR rendering device to render a virtual smartphone in the immersive XR environment to be viewable by Participants 1 and 2 through their respective XR headsets.

In one of these further embodiments, the XR rendering device tracks interaction of Participant 2's avatar hand, physical hand, virtual/physical pointer, etc. with the virtual smartphone and may change the rendered pose of the virtual smartphone responsive to Participant 2's interaction. For example, the XR rendering device may rotate the virtual smartphone to track movement of Participant 2 avatar hand or physical hand rotating while virtually holding the virtual smartphone. In this manner, Participant 2 can rotate the virtual smartphone to view other surfaces thereof, and Participant 1 can visually observe Participant 2's interaction with the virtual smartphone.

In another of these further embodiments, the XR rendering device tracks interaction of Participant 2's avatar hand or physical hand with the virtual smartphone and provides feedback to Participant 1 to responsively change pose of the physical smartphone which, in turn, will then change the rendered pose of the virtual smartphone. For example, the XR rendering device may track movement of Participant 2 avatar hand or physical hand which is posed to virtually hold the virtual smartphone, and provide visual feedback, audible feedback, and/or tactile feedback to guide Participant 1 to change pose of the physical smartphone in a manner that corresponds to the determined movement of Participant 2 avatar hand or physical hand. As Participant 1 change pose, e.g., rotates, the physical smartphone, the XR rendering device can track the observed movements to render updated poses of the virtual smartphone.

In an example, Participant 1 lets Participant 2 use Participant 1's smartphone, which is represented by computer-generated rendering as a virtual smartphone in the XR environment, to send a message to someone. Participant 1 pushes a physical smartphone through the virtual portal, which triggers computer-generated rendering of a virtual smartphone in the XR environment, and computer-generated rendering of a virtual representation of a user interface (UI) for the physical smartphone in the XR environment. Participant 2 interacts with the virtual user interface displayed on (or associated with, e.g., adjacent to) the virtual smartphone to, e.g., select a text message icon and enter (type-in, speech input, etc.) a message destination address (Participant 3 or other person with device having messaging capability) and message content. The message destination address and message content are communicated from the XR rendering device (XR server) to the physical smartphone and passed to a messaging application to trigger creation of a message directed to the message destination address (Participant 3) and containing the message content. Participant 2 and/or Particular 1 may further interact with the user interface displayed on the virtual smartphone to trigger sending of the created message by the physical smartphone to the message destination address.

In another example, a user, also called "participant," needs help from an online help center for operation of a smartphone. The user (participant) pushes the physical smartphone through the virtual portal, which triggers rendering of the virtual smartphone in an XR help center environment which includes a help center participant. A help center participant interacts with a virtual representation of a user interface displayed on (or associated with) the virtual smartphone. In one example, the help center participant selects a "Settings" icon displayed in the XR environment, which triggers communication of that selection to the physical smartphone and passed to the operating system (OS) to cause display of Settings sub-menu items on the physical smartphone and corresponding rendering of a representation of the Settings sub-menu items on or adjacent to the virtual smartphone in the XR environment. The help center participant can further select among the rendered hierarchy of displayed sub-menu items and/or set operational modes and/or values and/or settings thereof through the rendered user interface of the virtual smartphone to cause communication of corresponding selections and/or set operational modes and/or values and/or settings changes to the physical smartphone and corresponding control operation of the physical smartphone.

Some examples of participant interaction with a virtual electronic device through the virtual portal, include where Participant 2 is allowed to physically interact with the computer-generated virtual representation of the physical electronic device, to operational interact with and control the physical electronic device. For example, Participant 2 may use their hand to touch defined location(s) on the virtual electronic device, e.g., a displayed user interface, that is projected on their XR rendering device. The interaction may be of such nature that any internal operational states are changed and, if so, the interactions may be notified to Participant 1 for manual or explicit acknowledgement or non-acknowledge, e.g., to selectively permit or deny such interaction and operational control of the physical electronic device. The interactions may be selectively allowed subject to per-recipient default rules, etc. Participant 2 may be allowed to change the operation (state) of physical electronic device directly. These aspects will be described in further embodiments.

In some embodiments, the virtual user interface is rendered to display to the Participant 2 a first set of user selectable items that corresponds to a second set of user selectable items that are displayed on a display of the physical electronic device 210, and the identified characteristic indicates one of the user selectable items in the first set that has been selected by the Participant 2, e.g., through an avatar.

In some of these embodiments, the communication with the physical electronic device 210 identifies the one of the user selectable items in the first set to trigger control of the operational function of the physical electronic device 210 that is associated with one of the user selectable items in the second set that corresponds to the one of the user selectable items in the first set.

In some embodiments, the rendering of the virtual user interface includes an arrangement of graphical objects that are selectable by Participant 2, e.g., by an avatar, in the immersive XR environment and/or arrangement of menu items that are selectable by Participant 2 in the immersive XR environment.

Graphical objects may be icons or any virtual object which the participant is able to virtually press or interact with.

Once the physical object has passed the portal and is represented as a digital object, the digital representation of the physical object is unlocked for Participant 2, the receiving participant. Assuming that the physical object has operational features which can be represented by the digital representation of the physical object, how Participant 2 may access, activate, or modify these operational features may be controlled (governed) by a policy.

The virtual electronic device may be associated with a policy that includes an authorization part and a persistence part. The authorization part defines what features of the physical electronic device Participant 2 is allowed to utilize, e.g. apps, settings, features, interfaces, files etc., and how changes to such features should be transferred to the physical electronic device. The persistence part defines what happens to the features when the electronic device is no longer present in the virtual portal, e.g., do the features stay updated or revert to an operational state prior to the electronic device becoming present in the virtual portal

The policy may be defined by the user beforehand and may be associated with Participant 2, e.g. "when I share my device with Tommy, he may access applications A, B, C". The policy may also be decided ad hoc during the sharing, e.g. by issuing a voice comment "allow Tommy to access apps A, B, C."

Each feature may have its own specified access rules, where the attributes in these access rules includes, but are not limited to, read, write, delete, export, import, on-behalf-of.

The picture gallery may allow Participant 2 to look at the pictures (read) and to send the pictures to an external device (export). Participant 2 is however not allowed to change (write), add (import) or delete any pictures from the gallery.

On-behalf-of controls if Participant 2 is allowed to utilize Participant 1's profile and configured accounts when using features, i.e. should a mail application login to the first participant mailbox or prompt a login screen.

In some embodiments, the operations further include controlling what interaction Participant 2 is permitted to have with the virtual user interface of the virtual electronic device based on a security mechanism.

In some embodiments, the security mechanism defines functions of the physical electronic device 210 Participant 2 is allowed to control through interactions by the second participant with the virtual user interface.

For example, Participant 2 may interact with the virtual user interface through tracked motion of their hand, a stylus, a touch-pen, or by controlling an avatar representation of Participant 2 in the immersive XR environment.

In some embodiments, the security mechanism defines which items of the virtual user interface are selectable by Participant 2 in the immersive XR environment, e.g., through the avatar.

In some embodiments the operations also include to render the virtual user interface to display items that the security mechanism defines as being selectable by Participant 2 with a different visual indication than other items that the security mechanism defines as being not selectable by Participant 2 or to not display items that the security mechanism defines as being not selectable by Participant 2.

The XR rendering device (XR server) may be controlled based on one or more access rules as to which of the displayed virtual UI elements are selectable by Participant 2 or other participants in the immersive XR environment. The access rule(s) may define which identified persons are permitted to select which virtual UI elements or otherwise access defined operational functions of the physical electronic device. For example, Participant 2 may have different access privileges than another participant for selecting virtual UI element(s) and/or accessing defined operational functions of the physical electronic device. Virtual UI elements which are permitted by the access rule(s) to be selected by Participant 2 may be displayed in a visually different way (e.g., color, shading, font, etc.) than other virtual UI elements which are not permitted by the access rule(s) to be selected by Participant 2. The access rules may be visualized by grayed out options, or by something indicating the allowed actions to the second participant. Upon Participant 2 pressing a grayed-out (not-yet approved option), the managing application may identify the associated optional operational interaction and provide Participant 1 with an option to either allow or deny the interaction attempted or requested.

A persistence operation controls how actions on the virtual electronic device will affect the physical electronic device and for how long. Options include temporary or permanent control of settings and/or operations of the physical electronic device, per action or until end of session, automatic or manual approval by Participant 1 who possesses the physical electronic device. For example, when the above-example physical smartphone is withdrawn from the virtual portal, the XR rendering device (XR server) and/or an application on the physical smartphone (physical electronic device) can operate to return the physical smartphone to its initial operational state existing immediately before entering the virtual portal. In one embodiment, a journal of operations is created which logs a sequence of operations that are performed on the physical smartphone and/or changes in operational state(s) of the physical smartphone while it is within the virtual portal, e.g., responsive to participant(s) in the XR environment manipulating the virtual UI. In response to the physical smartphone being withdrawn from the virtual portal, the sequence of operations and/or operational state(s) logged in the journal can be operationally undone, e.g., reversed, to return the physical smartphone to its initial operational state existing immediately before entering the virtual portal.

In some embodiments, the operations also include to determine the security mechanism based on at least one of:
- a characteristic of the operational function of the electronic device attempted to be controlled by Participant 2;
- an identifier of Participant 2;
- a proof of possession of a digital token or cryptographic key of Participant 2, or secret token;
- a location of Participant 1;
- a location of Participant 2;
- a time of day or day of week, such as only being available on weekdays;
- a set of capabilities requested from the interaction of Participant 2;
- a characteristic of the location of Participant 1; and
- a characteristic of the location of Participant 2.

If the physical electronic device should be unaffected by the sharing, a temporary digital representation of the physical device (virtual electronic device) may be created, and any changes made will be deleted when the physical electronic device exits the portal.

In some embodiments, the operations also include to restore the physical electronic device 210 to an operational state existing prior to when the physical electronic device 210 entered the virtual portal responsive to the physical electronic device 210 being removed from the virtual portal.

In some embodiments, based on identifying a specific interaction of the second participant with the one combined VUI, stop the rendering of the combined VUI and generate separate VUIs belonging to the first and second physical device respectively.

In some embodiments, the operations also include to backup content of a portion of the at least one memory responsive to determining the physical electronic device 210 has entered the virtual portal. The operations further include to restore the portion of at least one memory based on the backup based on the physical electronic device 210 being removed from the virtual portal.

In some embodiments, the operations also include to generate a queue containing a sequence of identified characteristics of interactions of the avatar with the virtual user interface of the virtual electronic device while the physical electronic device 210 remains in the virtual portal. The operations further include to communicate the sequence of identified characteristics of the interactions contained in the queue to the physical electronic device 210 to control corresponding operational functions of the physical electronic device 210, e.g., responsive to the physical electronic device 210 being removed from the virtual portal. Alternatively or additionally, the queue may be generated and used at any time, e.g., generated while the physical electronic device 210 is outside the virtual portal and then used to control operation of the physical electronic device 210 while within the virtual portal.

In some embodiments, the operations also include to terminate rendering of the virtual electronic device representation in the immersive XR environment, including terminating the rendering of the virtual user interface responsive to the physical electronic device 210 being removed from the virtual portal.

If the physical electronic device should be changed on the other hand, the XR rendering device must store actions, e.g., operational inputs and/or changes, and transfer them to the physical electronic device. This can be performed in a direct manner, i.e., that each action is directly applied to the physical electronic device, keeping the physical electronic device and the virtual electronic device in sync. It is also possible to perform a bulk transfer of the changes when the physical electronic device exits the portal.

The permanence of the action may be chosen manually by the participant or automatically, either for each feature or for the physical electronic device as a whole.

Access rules may be context and geo-based; depending on location of Participant 2, for example at home, in some trusted environment, or at public location, relation to users in a defined vicinity of Participant 2, and depending on private, business context. Some applications and/or content may have different access rules applied.

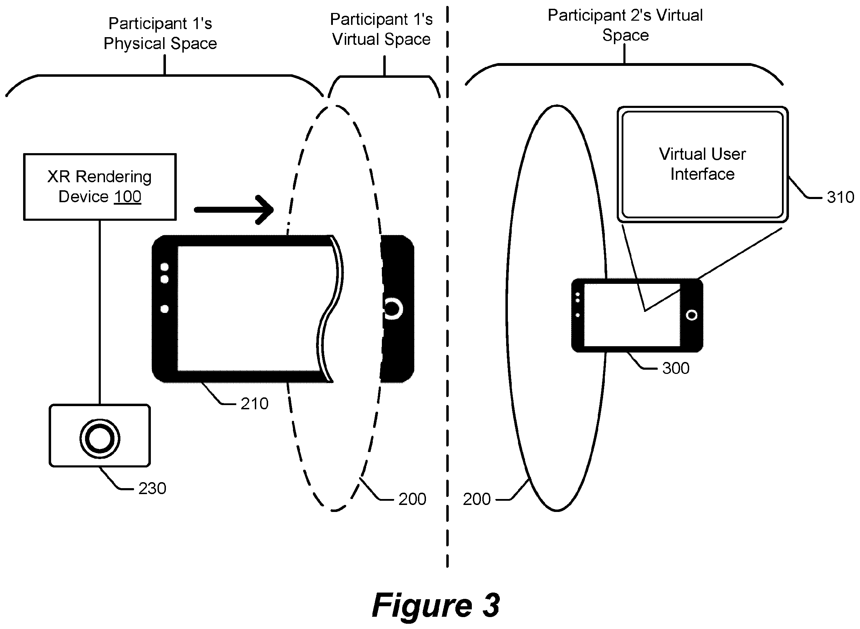

Figure 3 illustrates an alternative example operation of the XR rendering device of Figure 2 with a virtual user interface 310 being projected from the virtual electronic device in the virtual space of the immersive XR environment, in accordance with some embodiments of the present disclosure. Participant 2 can interact with the virtual user interface 310 in the immersive XR environment by, for example, controlling a hand of an avatar or using a real hand that is tracked in 3D space of the immersive XR environment via a camera or other position tracking sensor. Virtual user interface 310 may display menus, icons, information, etc. which be identical, similar, or different from what is displayed on a user interface of the physical electronic device. For example, the virtual user interface 310 may display user selectable menus having sets of items that are selectable by Particular 2 to view other items, set values, control settings, etc. which are then communicated to the physical electronic device to affect operation thereof.

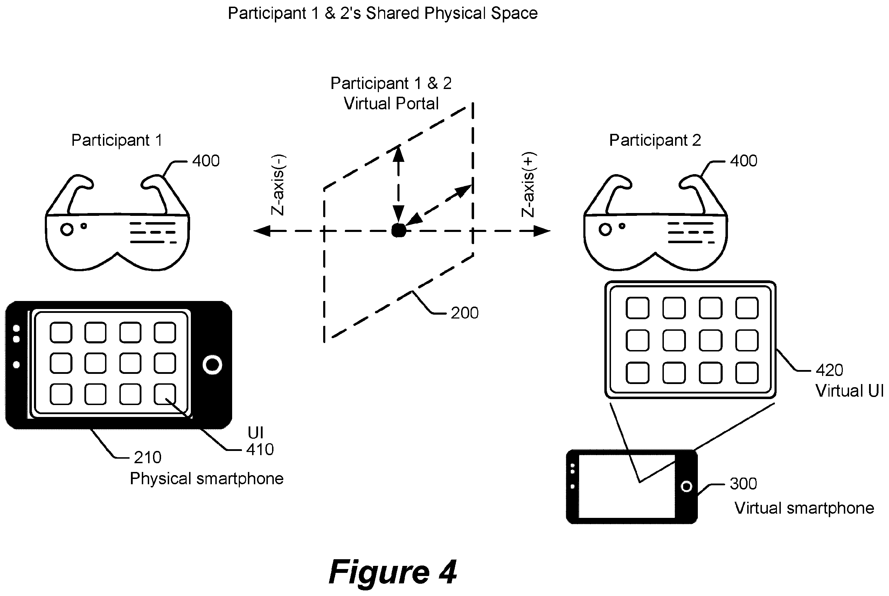

Figure 4 illustrates an example virtual portal with a virtual user interface (UI) 420 displaying the content of the UI 410 of a physical smartphone 210, in accordance with some embodiments of the present disclosure.

The user interface 410 may have graphical objects with which a participant may interact. The virtual user interface 420 is a virtual representation of the user interface 410 of the physical smartphone 210. The virtual user interface 420 is visible through XR rendering devices such as the XR headset 400. As explained herein, graphical objects may be icons or any graphical object which the participant is able to virtually press or otherwise interact. The virtual user interface 420 may be projected or displayed spaced apart from the virtual smartphone 300, such as illustrated in Figure 4. The virtual user interface 420 may be the same shape and size as the user interface 410 on the physical smartphone 210, or may be scaled to a different size and/or have a different shape compared to the user interface 410 on the physical smartphone 210. The virtual user interface 420 may have a different layout than the user interface 410 of the physical smartphone 210.

Often an object pushed through a virtual portal is owned by the participant (Participant 1) pushing it through the virtual portal, and then whatever digital states and attributes associated with the physical electronic device of Participant 1. In this scenario, Participant 1 may have defined or provided access rules for controlling what operational function(s) of the electronic device can be controlled by Participant 2, and control what is displayed or can be interacted with on the virtual user interface displayed in the XR environment for Participant 2. The access rules may be adapted based on a relationship between Participant 1 and Participant 2, e.g., a defined trust relationship being satisfied. As explained herein, operational functions and/or interactions that are not allowed for Participant 2 may be grayed-out or made non-visible in the virtual user interface, and/or interaction by Participant 2 with a grayed-out area may trigger a request to Participant 1 to allow increased access by Participant 2 with the physical electronic device.

There are other scenarios where Participant 2 may at least initially have sufficient access privileges to the physical electronic device. In these scenarios, Participant 2 may interact with the virtual user interface to enable or prohibit access to certain operational functions of the physical electronic device for access by Participant 2. For example, Participant 2 may interact with the virtual user interface, e.g., type in an unlock code, to unlock the user interface screen of the physical electronic device for access by Participant 2.

Accordingly, in some embodiments, the operations determine that Participant 2 has interacted with the virtual user interface of the electronic device to unlock the operational function of the physical electronic device 210. The operations communicating a message to the physical electronic device 210 indicating the physical electronic device 210 is to unlock the operational function.

In some embodiments, the operational function of the previous embodiments include one of an unlock function to allow all functionality of the physical electronic device 210 to be accessible to the Participant 1 and a defined set of function access privileges to restrict access by Participant 1 to operational functions of the physical electronic device 210 allowed by the defined set of function access privileges.

In some embodiments, the operations communicate another message to the physical electronic device 210 indicating the physical electronic device 210 is to lock the operational function responsive to the physical electronic device 210 no longer remaining in the virtual portal.

The operations may include to determine ownership of the physical electronic device when rendering the virtual electronic device, e.g., such as whether Participant 1 pushing the physical electronic device into the virtual portal is the owner or whether Participant 2 viewing the virtual electronic device is the owner of the physical electronic device. In an illustrative example, Participant 1 pushes a physical smartphone owned by Participant 2 through the virtual portal. Participant 2 interacts with a virtual user interface associated with the rendered virtual phone to enter a screen-unlock code, which is passed by the XR rendering device (XR server) to the physical smartphone where it is passed to the OS to unlock the screen user interface of the smartphone. Depending upon an access rule, the physical smartphone may remain unlocked while the physical smartphone remains in the virtual portal, and Participant 1 may be able to access all or defined UI elements allowed by the access rule. Further depending upon the access rule, the XR rendering device (XR server) may respond to Participant 1 removing the physical smartphone from the virtual portal by sending a message to the physical smartphone that triggers the physical smartphone to re-lock the user interface.

The access rule may contain restrictions on what content and/or application(s) can be accessed on the physical electronic device and/or can be rendered for viewing in the immersive XR environment.

If the device holding (pushing) Participant 1 is not the owner of physical electronic device and the receiving Participant 2 is the owner of physical electronic device, then access rules are retrievable from a managing node or XR rendering device to physical electronic device to be rendered for Participant 2 post the physical electronic device being passed through or into the virtual portal. The access rule may or may not contain restrictions on what content and/or application(s) is accessible by Participant 2.

The operations also include associating UI functionality to the digital electronic device according to Participant 2 and virtual electronic device access rules, such as enabling certain touch areas, icons, or function buttons.

The operations also include terminating access to digital representation of the physical object for Participant 2 upon determining the physical object is retracted (< trigger threshold) by Participant 1 out of the virtual portal (or virtual space). For example, in a scenario where Participant 1 has pushed a physical phone owned by Participant 2 through the virtual portal, Participant 1 can retract the second owner's physical phone out of the virtual portal. A lock command communicated from XR server to physical phone, where it is passed to operating system and triggers locking of the physical phone to prevent further operation by Participant 1. The phone may be returned to its prior operational state.

In some embodiments, the operations also include receiving a message from the electronic device indicating what content is displayed on the electronic device. The operations further include generating the virtual user interface to contain content that is based on what content is indicated by the message as being displayed on the electronic device.

In some of these embodiments, the message indicates at least one of:
- a listing of icons for display in the virtual user interface;
- a listing of menu items for display in the virtual user interface;
- a screen shot of content displayed on the electronic device for display in the virtual user interface; and
- a live screen mirroring between what is displayed on the electronic device and what is to be displayed in the virtual user interface.

Some embodiments are directed to enable multiple recipient users to interact with a single physical electronic device. For example, a first participant (Participant 1) pushes the physical electronic object through the virtual portal, and because there are more than one recipient participant the XR rendering device evaluates and applies per-recipient based interaction rules. For example, one trusted participant may obtain extensive access to interact with the virtual user interface and control corresponding operational function(s) of the physical electronic device, whereas a less trusted other participant may have more limited access.

Some embodiments are directed to what trigger activation and associated access to the virtual electronic device digital representation of the physical object activation and corresponding deactivation thereof.

Activation may be triggered when a defined amount of the physical electronic device has entered the virtual portal, and the deactivation may be triggered by removal of another defined amount of the physical electronic device from the virtual portal.

### Example XR Rendering Device Configuration.

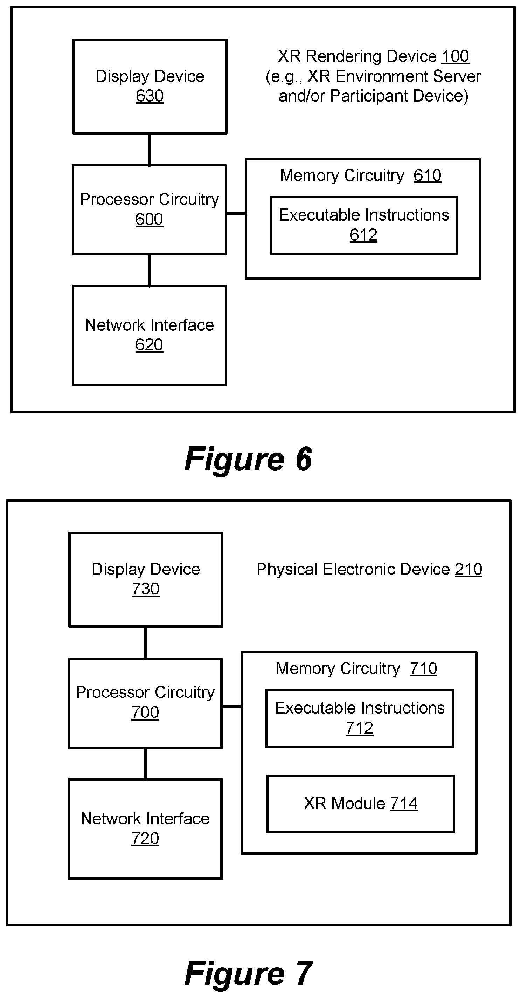

Figure 6 is a block diagram of components of an XR rendering device 100 that are configured to operate in accordance with some embodiments of the present disclosure. The XR rendering device 100 can include processing circuitry, at least one network interface 620 (network interface), and a display device 630. The processing circuitry may include at least one processor circuit 600 (processor), at least one memory 610 (memory). The processor 600 is operationally connected to these various components. The memory 610 stores executable instructions 612 that are executed by the processor 600 to perform operations. The processor 600 may include one or more data processing circuits, such as a general purpose and/or special purpose processor (e.g., microprocessor and/or digital signal processor), which may be collocated or distributed across one or more data networks. The processor 600 is configured to execute the instructions 612 in the memory 610, described below as a computer readable medium, to perform some or all of the operations and methods for one or more of the embodiments disclosed herein for an XR rendering device. As explained herein, the XR rendering device may be separate from and communicatively connected to the participant devices or may be at least partially integrated within one or more of the participant devices.

Figure 7 is a block diagram of components of an electronic device 210 that are configured to operate in accordance with some embodiments of the present disclosure. The electronic device 210 can include processing circuitry, at least one network interface 720 (network interface), and a display device 730. The processing circuitry may include at least one processor circuit 700 (processor), at least one memory 710 (memory). The processor 700 is operationally connected to these various components. The memory 710 stores executable instructions 712 and an XR module 714 that are executed by the processor 700 to perform operations. The processor 700 may include one or more data processing circuits, such as a general purpose and/or special purpose processor (e.g., microprocessor and/or digital signal processor), which may be collocated or distributed across one or more data networks. The processor 700 is configured to execute the instructions 712 and XR module 714 in the memory 710, described below as a computer readable medium, to perform some or all of the operations and methods for one or more of the embodiments disclosed herein for an electronic device.

### Interacting With a Combined Virtual Electronic Device in Immersive XR Environment:

Further embodiments of the present disclosure are directed to rendering a combined virtual electronic device in an immersive XR environment which enables participants in the XR environment to interact with combined functionality from two or more physical electronic devices.

In accordance with some embodiments, the XR rendering device 100 provides immersive XR environment in which two or more participants interact with a plurality of virtualized physical electronic devices (e.g., smartphone(s), tablet computer(s), smart watch(es), laptop computer(s), gaming machine(s), etc.) in a virtual portal space (VPS), e.g., 2D or 3D XR space in which devices are renderable and physical objects may be tracked. The operations can provide a first VPS of a first XR device for a first participant, a second VPS of a second XR device for a second participant, and management of which participant interactions with operational functions of the physical electronic devices which are rendered as a combined electronic device in the first and second VPSs.

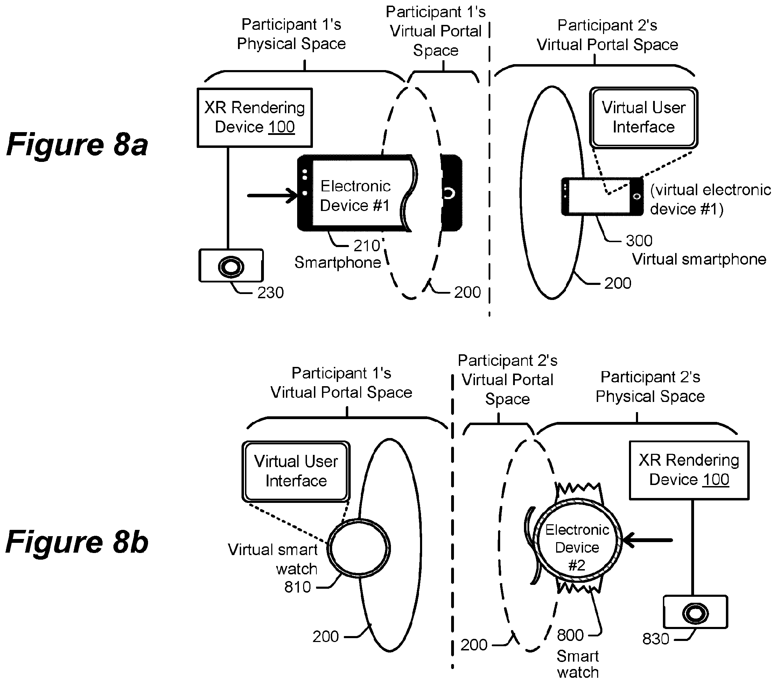

Figure 8a illustrates the XR rendering device 100 tracking location of a first physical electronic device in the first participant's ("Participant 1") physical space while being passed through a virtual portal and being rendered with a first virtual user interface (VUI) in the second VPS of the immersive XR environment for interaction with by a second participant ("Participant 2"), in accordance with some embodiments of the present disclosure.

Figure 8b similarly illustrates the XR rendering device 100 tracking location of a second physical electronic device in Participant 2's physical space while being passed through a virtual portal and being rendered with a second VUI in the first VPS of the immersive XR environment for interaction with by Participant 1, in accordance with some embodiments of the present disclosure. Without limitation of the term, the first physical electronic device is illustrated as a smartphone 210 and the second physical electronic device is illustrated as a smart watch 800. The XR rendering device 100 in Figure 8a may be the same device or a different device from that of Figure 8b. When different devices, the two XR rendering devices 100 can be operationally coupled through network communication to perform embodiments disclosed herein.

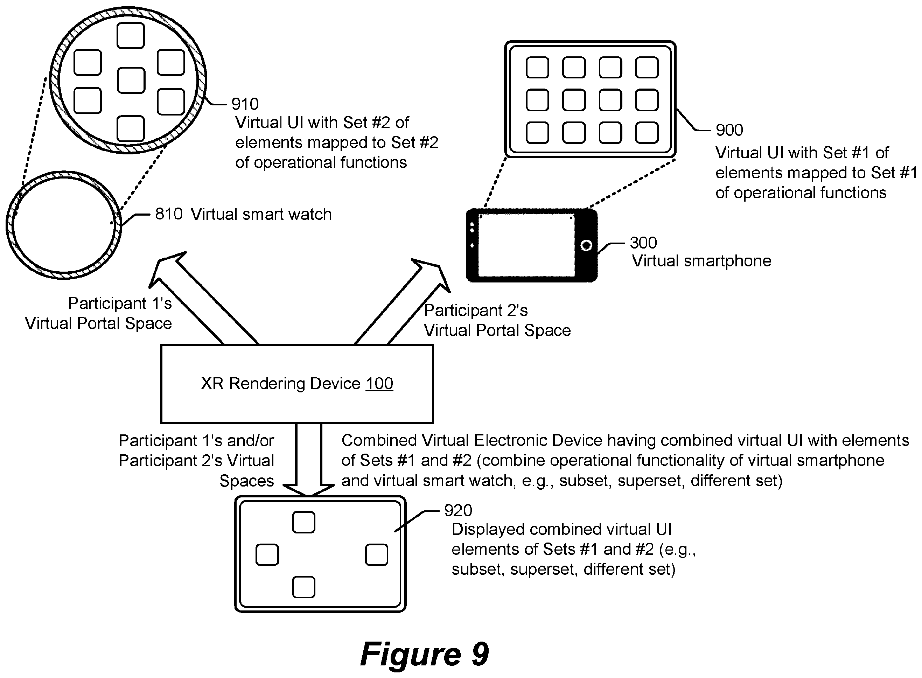

Figure 9 illustrates the XR rendering device rendering the VUIs of the smartphone 210 and the smart watch 800, and further rendering a combined virtual electronic device with a combined VUI 920, in accordance with some embodiments of the present disclosure.

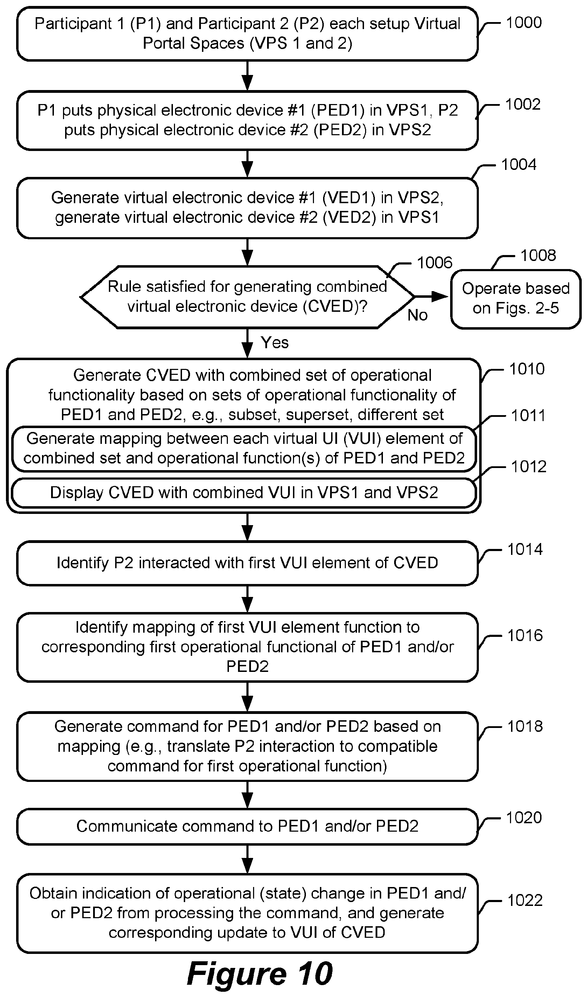

Figure 10 illustrate a flowchart of operations that can be performed by the XR rendering device 100 to render a combined virtual electronic device and control operational functions of the physical electronic devices represented by the combined virtual electronic device, in accordance with some embodiments of the present disclosure.

In the figures, Participants 1 and 2 may be different people or may be the same person when elapsed time occurs between when the same person interacts with the XR environment. For example, in an alternative of the example described below, the same person may introduce the smartphone 210 into the first VPS and then later introduce the smart watch 800 into the second VPS. The first and second VPSs may correspond to the same physical space or may correspond to different physical spaces, such as when the person inserts smartphone 210 into first VPS while at office and later inserts smart watch 800 into second VPS while at home.

Referring initially to Figures 8a and 10, through operational steps that may be similar to what has been described with regard to Figures 2-5, a first participant ("Participant 1") defines 1000 (sets-up) the first VPS at a location in physical space of Participant 1. The XR rendering device 100 tracks location of the smartphone 210 relative to the location of the first VPS, e.g., using a camera 230 or other sensor which may be part of an XR headset worn by Participant 1, a smart watch, etc. Based on determining 1002 the smartphone 210 has been put inside the first VPS, operations render (generate) 1004 a virtual smartphone 300 representation in the immersive XR environment of at least a portion of the smartphone 210. The rendering 300 of the smartphone 210 includes a first VUI with a first set of VUI elements that Participant 2 can interact with in the second VPS of the immersive XR environment to control the first set of operational functions of the smartphone 210. Participant 2 may, for example, virtually (by user interactions in the XR environment) select icons, sliders, enter values, and other interactions with VUI elements of the first set to trigger commands sent to and affect operation of the smartphone 210, such as according to one or more of the embodiments described above regarding Figures 2-5.

Referring now to Figure 8b with continuing reference to Figure 10, through operational steps that may be similar to what has been described with regard to Figures 2-5, Participant 2 defines 1000 (sets-up) the second VPS at a location in physical space of Participant 2. The XR rendering device 100 tracks location of the smart watch 800 relative to the location of the second VPS, e.g., using a camera 830 or other sensor which may be part of an XR headset worn by Participant 2, the smart watch 800, etc. Based on determining 1002 the smart watch 800 has been put inside the second VPS, operations render (generate) 1004 a virtual smart watch 810 representation in the immersive XR environment of at least a portion of the smart watch 800. The rendering 810 of the smart watch 800 includes a second VUI with a second set of VUI elements that Participant 1 can interact with in the first VPS of the immersive XR environment to control the second set of operational functions of the smart watch 800. Participant 1 may, for example, virtually select icons, sliders, enter values, and other interactions with VUI elements of the second set to trigger commands sent to and affect operation of the smart watch 800, such as according to one or more of the embodiments described above regarding Figures 2-5.

Referring now to Figure 9 with continuing reference to Figure 10, the XR rendering device 100 renders in Participant 2's virtual space (and also possibly in Participant 1's virtual space) the virtual smartphone 300 with a first VUI 900 with a set #1 of elements which are mapped to a set #1 of operational functions of the physical smartphone 210. Similarly, the XR rendering device 100 renders in Participant 1's virtual space (and also possibly in Participant 2's virtual space) the virtual smart watch 810 with a second VUI 910 with a set #2 of elements which are mapped to a set #2 of operational functions of the physical smart watch 800.

The XR rendering device 100 determines a combined set of operational functions based on the set #1 of operational functions of the smartphone 210 and based on the set #2 of operational functions of the smart watch 800.

Decision logic determines whether a rule has become satisfied for generating a combined virtual electronic device, and when not the continuing operations 1008 may be based on one or more of the embodiments explained above, e.g., Figures 2-5.

Based on determining 1006 the rule has become satisfied for generating the combined virtual electronic device, the XR rendering device 100 generates 1010 a rendering of the combined virtual electronic device in the immersive XR environment. The rendering of the combined virtual electronic device includes a combined VUI 820 with a combined set of VUI elements based on the set #1 and set #2 of VUI elements of the first and second VUI 900,910 and/or based on objects defined in a database which may reside in the XR rendering device 100 and/or in one or both physical electronic devices, or may be defined by user(s), e.g., based on an shape or form indicated by gestures of the user in the XR environment. The graphical rendering of the combined virtual electronic device may incorporate or be based on portions of both electronic devices, e.g., smartphone 210 and smart watch 800, one of the electronic devices, or neither device. The rendering of the combined VUI may similarly be based on the UIs of one or both devices or different therefrom, where the VUI elements may be adapted to provide enhanced user interaction in the XR environment and/or based on the VUI element being mapped an operational functionality that is formed by a combination of operational functions provided by both devices. For example, the combined virtual electronic device may be rendered to primarily look like the smart watch 800 but with a graphical representation of a camera which corresponds to camera functionality provided by the smartphone 210.

Each Participant may be displayed a different rendering of the combined virtual electronic device and/or the combined VUI. For example, one participant may have greater access rights to operational functionality or privileges and, therefore, is provided a larger set of VUI elements being displayed or made accessible through the combined VUI displayed to that participant. One or both participants may have privileges to define characteristics to be rendered for the combined virtual electronic device and/or the combined VUI.

Operations generate 1011 a mapping between the operational functions of the combined set and the VUI elements of the combined set, e.g., a mapping between each VUI element of the combined set and particular operational function(s) of the smartphone 210 and/or the smart watch 800. The combined virtual electronic device may be rendered (displayed) 1012 in Participant 1's VPS and/or in Participant 2's VPS. The mapping may define translations between various types of user interactions that can be identified with particular VUI elements and what corresponding user input is to be indicated in commands sent to the corresponding (mapped) operational functions of the physical electronic devices. The mapping may correspond to a one-to-one mapping between individual VUI elements of the combined set and individual operational functions of the smartphone 210 and the smart watch 800. Alternatively, a one-to-many mapping may be provided between an individual VUI element of the combined set and a plurality of operational functions of the smartphone 210 and/or the smart watch 800.

For example, although the smartphone 210 and smart watch 800 may lack any joystick interface, the combined virtual electronic device may be rendered with a graphical rendering of a joystick that can be virtually operated by the participants (interactions in the XR environment) to provide input to the mapped one or more operational functions of the combined set. Operations can translate movements of the virtual joystick into input that is provided as user input to the mapped one or more operational functions.

Participant 1 and Participant 2 can interact with the combined set of VUI elements to trigger control of corresponding operational functions of the smartphone 210 and/or the smart watch 800, depending upon which VUI element of the combined set is interactive with and which operational function of which of the smartphone 210 and the smart watch 800 is mapped to that VUI element.

In the illustrated example, operations identify 1014 a characteristic of an interaction of Participant 2 with a first VUI element of the combined set, e.g., touched-selected an icon, moved a slider, entered a value or text, etc. How the participant interacts with a VUI element is also referred to as a "characteristic" of the interaction, which may indicate that an icon or other indicia was touch-selected or moved, indicate time duration of the selection and/or where moved and/or direction moved, indicate that a set of icons were simultaneously selected and/or moved and/or direction of movement, indicate values or text that were entered, indicate which menu item was selected or interacted with, etc. Operations identify 1016 based on the mapping which at least one of the operational functions of the combined set is mapped to the first VUI element. In this manner, Participant 2 can interact with the first VUI element to affect the mapped operational function of the smartphone 210 and/or the smart watch 800.

Operations generate 1018 a command based on the characteristic of the interaction of the second participant with the first VUI element of the combined set and based on the identified at least one of the operational functions of the combined set. Operations communicate 1020 the command to the smartphone 210 and/or the smart watch 800 to control at least one of the operational functions of the first set of operational functions of the smartphone 210 corresponding to the identified at least one of the operational functions of the combined set and/or to control at least one operational function of the second set of the smart watch 800 corresponding to the identified at least one of the operational functions of the combined set. In some embodiments, the state of the smartphone and/or the smart watch is digitally represented by a software module in XR rendering device 100 or a device or server communicatively coupled to the XR rendering device 100. In such embodiments, the command may instead be sent to the software module which represents the state of the smartphone or smart watch. The software module may forward the command to the smartphone or smart watch directly, update the state of according to the command and communicate the new state to the software module, or update the state locally only and leave the smartphone or smart watch unaffected by the command.

Operations receive (obtain) an indication of an operational (e.g., state) change in the smartphone 210 and/or the smart watch 800 from processing the command, and generate 1022 a corresponding update to the combined VUI 920 of the combined virtual electronic device. For example, when the command is sent to the smart watch 800 and triggers a change in the displayed UI on the smart watch 800, a message can be sent from the smart watch 800 to the XR rendering device 100 indicating the change in causing the XR rendering device 100 to change to the combined VUI 920 based on that indication. In some embodiments, the corresponding update, additionally or alternatively, originates from a software module which represents the state of the smartphone or smart watch.

In one embodiment, operations receive a message from the smartphone 210 and/or the smart watch 800 which was controlled. The message indicates what content is being displayed responsive to the control. The operations then responsively update the combined VUI to contain content that is based on what content is indicated by the message as being displayed responsive to the control. The message may, for example, indicate at least one of: 1) a listing of icons displayed on a user interface of the smartphone 210 and/or the smart watch 800 which was controlled; 2) a listing of menu items displayed on the user interface of smartphone 210 and/or the smart watch 800 which was controlled; and 3) an indication of text and/or graphical indicia displayed on the user interface of the smartphone 210 and/or the smart watch 800 which was controlled.

### Selection of Operational Functions of Physical Electronic Devices Included in Combined Set of Combined Virtual Electronic Device:

Operations to select which operational functions of which physical electronic devices are to be included in the combined set of operational functions, which is to be made available for interaction through the combined VUI, can be based on policies that result in selection of a subset or superset of the individual sets of operational functions of individual ones of the physical electronic devices. For example, smartphone 210 may have a set of operational functions A-F and smart watch 800 may have a set of operational functions A, B, and G-J. Operations may select the combined set of operational functions to contain a common subset of the functions A and B, a superset of the functions A through F and G through J, or a set of functions A and G which satisfy one or more policies.

The policies may define types of operational functions or identify operational functions that are allowed to be combined in a combined VUI for interaction within the XR immersive environment. In the above example scenario, the policies may cause the operations to select the combined set of operational functions to contain a A,G,H which are determined to satisfy a similarity rule (e.g., substantially overlapping functionality), or may disable one or more of the functions from made available for access through the combined VUI. Other policies and operational decisions are explained below for selecting operational functions for inclusion in the combined set rendered for the combined virtual electronic device.

For example, in the context of Figure 9, the combined set of VUI elements that are selected for rendering in the combined VUI 920 can include at least one of the VUI elements of Set #1 rendered in the virtual UI 900 of the virtual smartphone 300 and include at least one of the VUI elements of Set #2 rendered in the virtual UI 910 of the virtual smart watch 810. The combined set of VUI elements may include a subset of the VUI elements of Sets #1 and #2, which are selected based on policies which may be: 1) user defined; 2) determined based on compatibility of individual ones of the operational functions of the smartphone 210 and smart watch 800 with being interacted with through a rendered VUI element in the XR environment; 3) determined based on similarity (e.g., same or compatible functionality) of an operation function present on both of the smartphone 210 and smart watch 800 with being interacted with through a combined VUI element rendered in the XR environment and mapped to both of the similar operational functions; 4) determined based on access rules and/or recipient-sender trust relations (e.g., access rules and/or trust relations between Participant 1 and Participant 2); etc.

Although some embodiments are explained in the context of combining operational functions of two VPSs and two electronic devices, such as shown in Figure 9, the disclosed operations may be used in a similar manner with any number of VPSs (e.g., 1 or more) and any plural number of electronic devices (e.g., which may reside in the 1 or more VPSs). The number of electronic devices that are mapped to the combined virtual electronic device may dynamically change based on electronic devices being introduced into a VPS, e.g., triggering adding of operational functions of the introduced device, or removed from a VPS, e.g., triggering removal or grayed-out (cease being accessible to participants) of operational functions associated with the removed device. Operational functions of a removed device may persist to remain accessible in the combined virtual electronic device based on policies, which may be related to participant access privileges, persistence duration settings, etc. For example, the communicative coupling between the XR rendering device 100 and the electronic device may persist for a pre-defined period of time after the electronic device has been removed from the VPS.

In more particular examples, the participants may specify which operational functions of their respective devices are to be included in the combined set for virtualization in the combined virtual electronic device and enable interaction with in the XR environment. The participants may define capabilities of operational functions of the respective devices, e.g., camera of smartphone 210, photo application of smartphone 210, heart rate function and location function of smart watch 800, etc., which the operation use to select the combined set.

When no specific operational functions are identified for inclusion in the combined set and when more than one capability of the same type is determined to be available on more than one physical electronic device, the XR rendering device 100 can operate based on rules which give precedence to one of the physical electronic devices over the other. The policy(ies) may include precedence rules based on one or more of the following:
**1.** Ability for an operational function of one physical electronic device to be virtualized into the combined virtual electronic device for interaction in the XR environment;
**2.** Processing capabilities of the physical electronic devices (e.g., capability is selected from device with most processing power);
**3.** Type of physical electronic device (e.g., laptop capability is always selected over smartphone capability, smartphone capability is selected over smart watch capability, etc.)
**4.** Power supply of the physical electronic devices (device with current/predicted better power status - given two laptops with equal capabilities, XR rendering device 100 may select one having best expected battery life)
**5.** Connectivity capabilities of the physical electronic devices and based on the combined virtual electronic device forecasted virtualized operational capabilities. Respective physical electronic device's uplink or downlink communication performance; (e.g., bitrate, reference signal received power (RSRP), signal-to-noise and interference ratio (SINR), Channel quality indicator (CQI), packet delay/jitter, etc.); whether physical electronic device is stationary or mobile (e.g., select operational function of station device over mobile device); type of connectivity in terms of cellular, Wi-Fi, cable, etc.;
**6.** Related capability coherence, e.g., if microphone is selected from smartphone 210, speaker should also be selected from smartphone 210;
**7.** Whether one physical electronic device has a preferred or known status versus an unpreferred or unknown status, e.g., smart watch 800 has been used previously by Participant 1 so select operational function on smart watch 800 for inclusion in the combined set of operational functions for combined virtual electronic device; and
**8.** Physical size of UI element(s) associated with operational function on one of the electronic devices, form factor of UI element(s), or other visual attributes of the UI element(s).

In other policy variants, two virtual capabilities of the same type may both be included in the combined set, and Participant 1 may, through the user of the combined VUI, manually select which capability that is desired for the current interaction.

In another example embodiment, operations determine the combined set of operational functions to include only operational functions of set #1 of the smartphone 210 that satisfy a similarity rule to operational functions of set #2 of the smart watch 800.

In some other embodiments, the combined set of operational functions includes at least one function that is an operational combination of at least one operational function of the set #1 of the smartphone 210 and at least one operational function of set #2 of the smart watch 800.

In some other embodiments, operations determine the combined set of operational functions to be included in the operational functions of set #1 of the smartphone 210 based on which operations are compatible with operational functions of the set #2 of the smart watch 800. For example, operation may determine the combined set of operational functions based on selecting operational functions among set #1 and set #2 based on identifying a first operational function of set #1 that operates to output data that is compatible for being processed as an input to a second operational function of set #2. The operations generate a first linked operational function of the combined set that routes data output by the first operational function of set #1 to the input of the second operational function of set #2. Based on identifying an interaction of the second participant with a VUI element of the combined set that is mapped to the first linked operational function of the combined set, operations then route data output by the first operational function of set #1 to the input of the second operational function of set #2, and generate in the combined VUI a rendering based on data output by the second operational function.

In another embodiment, the operation to determine the combined set of operational functions further includes to select operational functions among set #1 and set #2 based on identifying a third operational function of set #1 that operates to output data that can be translated to become compatible for being processed as an input to a fourth operational function of set #2. Operations generate a second linked operational function of the combined set that routes data output by the third operational function of set #1 to an input of a translation function, and routes data output by the translation function to the input of the fourth operational function of set #2. Based on identifying an interaction of the second participant with a VUI element of the combined set that is mapped to the second linked operational function of the combined set, operations route data output by the third operational function of set #1 to the input of the translation function, and route data output by the translation function to the input of the fourth operational function of set #2, and generate in the combined VUI a rendering based on data output by the fourth operational function.

The XR rendering device 100 may store results of any one or more of the operations Figures 8-10, such as renderings of combined virtual electronic devices, combined VUI, sets of VUI elements of the combined VUI(s), etc., and stored data may be associated with the physical electronic devices, users, etc. to conserve computational resources when restarting or activating generation of a combined virtual electronic device, e.g., operations 1010-1022 in Figure 10. The XR rendering device 100 may store other settings to facilitate improved compatibility with rendering of related graphical objects in the VPSs of users, such as by saving display resolution capabilities, communication interface capabilities, etc. of XR devices which have been used by participants.

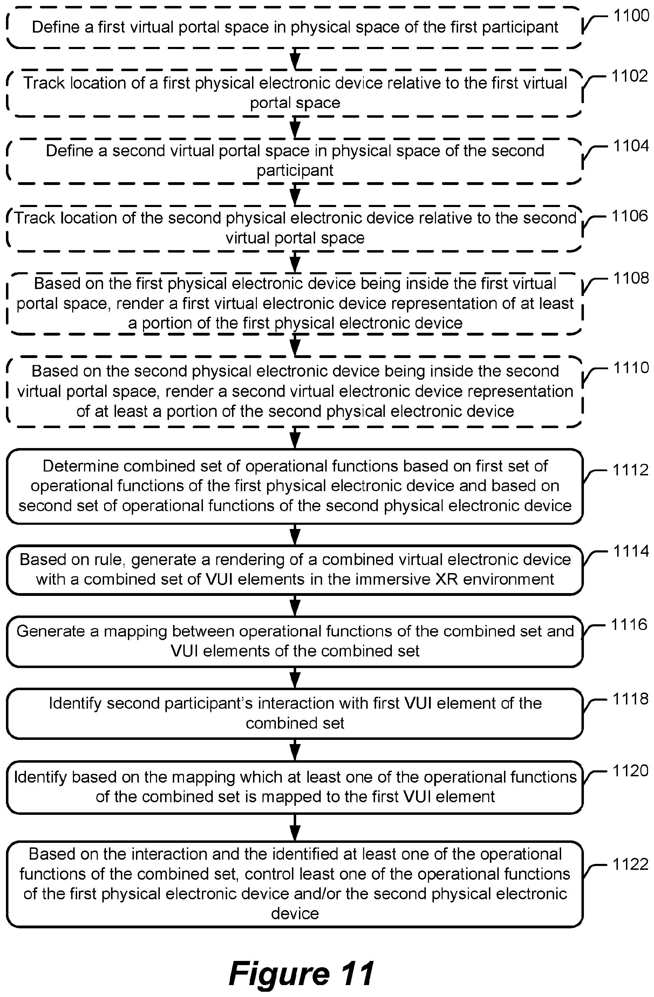

Operations in accordance with the present disclosure are not limited to the particular figures and flowcharts described above, but instead may be more generally represented by the flowchart of Figure 11. Figure 11 illustrate a flowchart of operations that can be performed by an XR rendering device to render a combined virtual electronic device and control operational functions of the physical electronic devices represented by the combined virtual electronic device, in accordance with some embodiments of the present disclosure.

Referring to Figure 11, operations define 1100 the first virtual portal space at a location in physical space of the first participant, and track 1102 a location of the first physical electronic device relative to the location of the first virtual portal space. Operations define 1104 the second virtual portal space at a location in physical space of the second participant, and track 1106 a location of the second physical electronic device relative to the location of the second virtual portal space. Based on determining the first physical electronic device is inside the first virtual portal space, operations render 1108 a first virtual electronic device representation in the immersive XR environment of at least a portion of the first physical electronic device, where the rendering of the first virtual electronic device comprises a first VUI with a first set of VUI elements that the second participant can interact with in the second virtual portal space of the immersive XR environment to control the first set of operational functions of the first physical electronic device. Similarly, based on determining the second physical electronic device is inside the second virtual portal space, operations render 1110 a second virtual electronic device representation in the immersive XR environment of at least a portion of the second physical electronic device, where the rendering of the second virtual electronic device comprises a second VUI with a second set of VUI elements that the first participant can interact with in the first virtual portal space of the immersive XR environment to control the second set of operational functions of the second physical electronic device.

Operations 1100 through 1110 are optional, such that some embodiments are not limited to performing one or more of operations 1100 through 1110.

Operations determine 1112 a combined set of operational functions based on a first set of operational functions of a first physical electronic device in a first virtual portal space of the immersive XR environment and based on a second set of operational functions of a second physical electronic device in the first virtual portal space or a second virtual portal space of the immersive XR environment.

Based on determining a rule has become satisfied for generating a combined virtual electronic device, operations generate 1114 a rendering of the combined virtual electronic device in the immersive XR environment, wherein the rendering of the combined virtual electronic device comprises a combined virtual user interface (VUI) with a combined set of VUI elements that the first participant can interact with in the first virtual portal space to control operational functions of the combined set and/or the second participant can interact with in the second virtual portal space to control operational functions of the combined set.

Operations generate 1116 a mapping between the operational functions of the combined set and the VUI elements of the combined set. Operations identify 1118 a characteristic of an interaction of the second participant with a first VUI element of the combined set. Operations identify 1120 based on the mapping which at least one of the operational functions of the combined set is mapped to the first VUI element. Based on the characteristic of the interaction of the second participant with the first VUI element of the combined set and based on the identified at least one of the operational functions of the combined set, operations control 1122 at least one of the operational functions of the first set of operational functions of the first physical electronic device corresponding to the identified at least one the operational functions of the combined set and/or control 1122 at least one operational function of the second set of the second physical electronic device corresponding to the identified at least one the operational functions of the combined set.

Further operations may include any one or more of the embodiments disclosed above with regard to Figures 1-10.

### Further Definitions and Embodiments:

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

The scope of the invention is set out in the appended claims.

## Claims

1. An extended reality, XR, rendering device (100) for rendering an immersive XR environment on display devices for viewing by first and second participants in the immersive XR environment, the XR rendering device comprising:
at least one processor (600); and
at least one memory (610) storing instructions executable by the at least one processor (600) to perform operations to:
determine a combined set of operational functions based on a first set of operational functions of a first physical electronic device (210) in a first virtual portal space of the immersive XR environment and based on a second set of operational functions of a second physical electronic device (800) in the first virtual portal space or a second virtual portal space of the immersive XR environment;
based on determining a rule has become satisfied for generating a combined virtual electronic device, generate a rendering of the combined virtual electronic device in the immersive XR environment, wherein the rendering of the combined virtual electronic device comprises a combined virtual user interface, VUI, with a combined set of VUI elements that the first participant can interact with in the first virtual portal space to control operational functions of the combined set and/or the second participant can interact with in the second virtual portal space to control operational functions of the combined set;
generate a mapping between the operational functions of the combined set and the VUI elements of the combined set;
identify a characteristic of an interaction of the second participant with a first VUI element of the combined set;
identify based on the mapping which at least one of the operational functions of the combined set is mapped to the first VUI element; and
based on the characteristic of the interaction of the second participant with the first VUI element of the combined set and based on the identified at least one of the operational functions of the combined set, control at least one of the operational functions of the first set of operational functions of the first physical electronic device (210) corresponding to the identified at least one the operational functions of the combined set and/or control at least one operational function of the second set of the second physical electronic device (800) corresponding to the identified at least one the operational functions of the combined set.

2. The XR rendering device (100) of Claim 1, wherein the instructions executable by the at least one processor further perform operations to:
define the first virtual portal space at a location in physical space of the first participant;
track a location of the first physical electronic device (210) relative to the location of the first virtual portal space;
define the second virtual portal space at a location in physical space of the second participant;
track a location of the second physical electronic device (800) relative to the location of the second virtual portal space;
based on determining the first physical electronic device (210) is inside the first virtual portal space, render a first virtual electronic device representation in the immersive XR environment of at least a portion of the first physical electronic device (210), wherein the rendering of the first virtual electronic device comprises a first VUI with a first set of VUI elements that the second participant can interact with in the second virtual portal space of the immersive XR environment to control the first set of operational functions of the first physical electronic device (210); and
based on determining the second physical electronic device (800) is inside the second virtual portal space, render a second virtual electronic device representation in the immersive XR environment of at least a portion of the second physical electronic device (800), wherein the rendering of the second virtual electronic device comprises a second VUI with a second set of VUI elements that the first participant can interact with in the first virtual portal space of the immersive XR environment to control the second set of operational functions of the second physical electronic device (800).

3. The XR rendering device (100) of Claim 2, wherein the combined set of VUI elements rendered in the combined VUI includes at least one of the VUI elements of first set rendered in the first virtual electronic device and includes at least one of the VUI elements of second set rendered in the second virtual electronic device.

4. The XR rendering device (100) of any of Claims 1 to 3, wherein the instructions executable by the at least one processor further perform operations to:
determine the combined set of operational functions to include only operational functions of the first set of the first physical electronic device (210) that satisfy a similarity rule to operational functions of the second set of the second physical electronic device (800).

5. The XR rendering device (100) of any of Claims 1 to 3, wherein the instructions executable by the at least one processor further perform operations to:
determine the combined set of operational functions to include operational functions of the first set of the first physical electronic device (210) that are compatible with operational functions of the second set of the second physical electronic device (800).

6. The XR rendering device (100) of any of Claims 1 to 5, wherein the instructions executable by the at least one processor further perform operations to:
determine the combined set of operational functions to include at least one function that is an operational combination of at least one operational function of the first set of the first physical electronic device (210) and at least one operational function of the second set of the second physical electronic device (800).

7. The XR rendering device (100) of any of Claims 1 to 6, wherein the instructions executable by the at least one processor further perform operations to:
receive a message from the first physical electronic device (210) and/or the second physical electronic device (800) which is controlled, indicating what content is being displayed responsive to the control; and
update the combined VUI to contain content that is based on what content is indicated by the message as being displayed responsive to the control.

8. The XR rendering device (100) of Claim 7, wherein the message indicates at least one of:
a listing of icons displayed on a user interface of the physical electronic device (210) and/or the second physical electronic device (800) which is controlled;
a listing of menu items displayed on the user interface of the physical electronic device (210) and/or the second physical electronic device (800) which is controlled ;
an indication of text and/or graphical indica displayed on the user interface of the physical electronic device (210) and/or the second physical electronic device (800) which is controlled.

9. The XR rendering device (100) of any of Claims 1 to 8, wherein the operation to determine the combined set of operational functions based on the first set of operational functions of the first physical electronic device (210) and based on the second set of operational functions of the second physical electronic device (800), comprises to:
select operational functions among the first and second sets based on policies for combining types of operational functions.

10. The XR rendering device (100) of any of Claims 1 to 9, wherein the operation to determine the combined set of operational functions based on the first set of operational functions of the first physical electronic device (210) and based on the second set of operational functions of the second physical electronic device (800), comprises to:
select operational functions among the first and second sets based on identifying a first operational function of the first set that operates to output data that is compatible for being processed as an input to a second operational function of the second set;
generate a first linked operational function of the combined set that routes data output by the first operational function of the first set to the input of the second operational function of the second set; and
based on identifying an interaction of the second participant with a VUI element of
the combined set that is mapped to the first linked operational function of the combined set,
route data output by the first operational function of the first set to the input of the second operational function of the second set, and
generate in the combined VUI a rendering based on data output by the second operational function.

11. The XR rendering device (100) of Claim 10, wherein the operation to determine the combined set of operational functions further comprises to:
select operational functions among the first and second sets based on identifying a third operational function of the first set that operates to output data that can be translated to become compatible for being processed as an input to a fourth operational function of the second set;
generate a second linked operational function of the combined set that routes data output by the third operational function of the first set to an input of a translation function, and routes data output by the translation function to the input of the fourth operational function of the second set; and
based on identifying an interaction of the second participant with a VUI element of
the combined set that is mapped to the second linked operational function of the combined set,
route data output by the third operational function of the first set to the input of the translation function, and route data output by the translation function to the input of the fourth operational function of the second set, and
generate in the combined VUI a rendering based on data output by the fourth operational function.

12. The XR rendering device (100) of any of Claims 1 to 11, wherein the operation to generate a rendering of the combined virtual electronic device in the immersive XR environment, comprises to:
obtain characteristics of UI elements of the first physical electronic device (210) related to operational functions of the combined set;
obtain characteristics of UI elements of the second physical electronic device (800) related to operational functions of the combined set; and
generate the rendering of the combined virtual electronic device in the immersive XR environment based on the obtained characteristics of the UI elements of the first physical electronic device (210) and the second physical electronic device (800).

13. The XR rendering device (100) of any of Claims 1 to 12, wherein the instructions executable by the at least one processor further perform operations to:
control what interaction the second participant is permitted to have with the combined set of VUI elements in the second virtual portal space to control operational functions of the combined set, based on a security mechanism.

14. The XR rendering device (100) of Claim 13, wherein:
the security mechanism defines which VUI elements of the combined set are selectable by the second participant in the second virtual portal space; and
the security mechanism is defined by the first participant.

15. A method performed by an extended reality, XR, rendering device (100) for rendering an immersive XR environment on display devices for viewing by first and second participants in the immersive XR environment, the method comprising:
determining (1112) a combined set of operational functions based on a first set of operational functions of a first physical electronic device (210) in a first virtual portal space of the immersive XR environment and based on a second set of operational functions of a second physical electronic device (800) in the first virtual portal space or a second virtual portal space of the immersive XR environment;
based on determining a rule has become satisfied for generating a combined virtual electronic device, generating (1114) a rendering of the combined virtual electronic device in the immersive XR environment, wherein the rendering of the combined virtual electronic device comprises a combined virtual user interface, VUI, with a combined set of VUI elements that the first participant can interact with in the first virtual portal space to control operational functions of the combined set and/or the second participant can interact with in the second virtual portal space to control operational functions of the combined set;
generating (1116) a mapping between the operational functions of the combined set and the VUI elements of the combined set;
identifying (1118) a characteristic of an interaction of the second participant with a first VUI element of the combined set;
identifying (1120) based on the mapping which at least one of the operational functions of the combined set is mapped to the first VUI element; and
based on the identified at least one of the operational functions of the combined set, control (1122) at least one of the operational functions of the first set of operational functions of the first physical electronic device (210) corresponding to the identified at least one the operational functions of the combined set and/or control (1122) at least one operational function of the second set of the second physical electronic device (800) corresponding to the identified at least one the operational functions of the combined set.

## Patentansprüche

1. Extended-Reality-Rendering-Vorrichtung, XR-Rendering-Vorrichtung, (100) zum Rendern einer immersiven XR-Umgebung auf Anzeigevorrichtungen zur Betrachtung durch einen ersten und einen zweiten Teilnehmer in der immersiven XR-Umgebung, wobei die XR-Rendering-Vorrichtung Folgendes umfasst:
mindestens einen Prozessor (600); und
mindestens einen Speicher (610), der Anweisungen speichert, die von dem mindestens einen Prozessor (600) ausgeführt wird, um Operationen zu Folgendem durchführen:
Bestimmen eines kombinierten Satzes von Betriebsfunktionen basierend auf einem ersten Satz von Betriebsfunktionen einer ersten physischen elektronischen Vorrichtung (210) in einem ersten virtuellen Portalraum der immersiven XR-Umgebung und basierend auf einem zweiten Satz von Betriebsfunktionen einer zweiten physischen elektronischen Vorrichtung (800) in dem ersten virtuellen Portalraum oder einem zweiten virtuellen Portalraum der immersiven XR-Umgebung;
basierend auf dem Bestimmen, dass eine Regel zum Erzeugen einer kombinierten virtuellen elektronischen Vorrichtung erfüllt wurde, Erzeugen eines Renderings der kombinierten elektronischen Vorrichtung in der immersiven XR-Umgebung, wobei das Rendering der kombinierten virtuellen elektronischen Vorrichtung eine kombinierte virtuelle Benutzeroberfläche, VUI, mit einem kombinierten Satz von VUI-Elementen umfasst, mit denen der erste Teilnehmer in dem ersten virtuellen Portalraum interagieren kann, um Betriebsfunktionen des kombinierten Satzes zu steuern, und/oder mit denen der zweite Teilnehmer in dem zweiten virtuellen Portalraum interagieren kann, um Betriebsfunktionen des kombinierten Satzes zu steuern;
Erzeugen einer Zuordnung zwischen den Betriebsfunktionen des kombinierten Satzes und den VUI-Elementen des kombinierten Satzes;
Identifizieren einer Charakteristik einer Interaktion des zweiten Teilnehmers mit einem ersten VUI-Element des kombinierten Satzes;
Identifizieren basierend auf der Zuordnung, welche mindestens eine der Betriebsfunktionen des kombinierten Satzes dem ersten VUI-Element zugeordnet wird; und
basierend auf der Charakteristik der Interaktion des zweiten Teilnehmers mit dem ersten VUI-Element des kombinierten Satzes und basierend auf der identifizierten mindestens einen der Betriebsfunktionen des kombinierten Satzes Steuern mindestens einer der Betriebsfunktionen des ersten Satzes von Betriebsfunktionen der ersten physischen elektronischen Vorrichtung (210), die der identifizierten mindestens einen der Betriebsfunktionen des kombinierten Satzes entspricht, und/oder Steuern mindestens einer Betriebsfunktion des zweiten Satzes der zweiten physischen elektronischen Vorrichtung (800), die der identifizierten mindestens einen der Betriebsfunktionen des kombinierten Satzes entspricht.

2. XR-Rendering-Vorrichtung (100) nach Anspruch 1, wobei die Anweisungen von dem mindestens einen Prozessor ausgeführt werden können, um ferner Operationen zu Folgendem durchzuführen:
Definieren des ersten virtuellen Portalraums an einer Position im physischen Raum des ersten Teilnehmers;
Verfolgen einer Position der ersten physischen elektronischen Vorrichtung (210) relativ zu der Position des ersten virtuellen Portalraums;
Definieren des zweiten virtuellen Portalraums an einer Position im physischen Raum des zweiten Teilnehmers;
Verfolgen einer Position der zweiten physischen elektronischen Vorrichtung (800) relativ zu der Position des zweiten virtuellen Portalraums;
basierend auf dem Bestimmen, dass sich die erste physische elektronische Vorrichtung (210) innerhalb des ersten virtuellen Portalraums befindet, Rendern einer Darstellung der ersten virtuellen elektronischen Vorrichtung in der immersiven XR-Umgebung mindestens eines Teils der ersten physischen elektronischen Vorrichtung (210), wobei das Rendering der ersten virtuellen elektronischen Vorrichtung eine erste VUI mit einem ersten Satz von VUI-Elementen umfasst, mit denen der zweite Teilnehmer in dem zweiten virtuellen Portalraum der immersiven XR-Umgebung interagieren kann, um den ersten Satz von Betriebsfunktionen der ersten physischen elektronischen Vorrichtung (210) zu steuern; und
basierend auf dem Bestimmen, dass sich die zweite physische elektronische Vorrichtung (800) innerhalb des zweiten virtuellen Portalraums befindet, Rendern einer Darstellung der zweiten virtuellen elektronischen Vorrichtung in der immersiven XR-Umgebung mindestens eines Teils der zweiten physischen elektronischen Vorrichtung (800), wobei das Rendering der zweiten virtuellen elektronischen Vorrichtung eine zweite VUI mit einem zweiten Satz von VUI-Elementen umfasst, mit denen der erste Teilnehmer in dem ersten virtuellen Portalraum der immersiven XR-Umgebung interagieren kann, um den zweiten Satz von Betriebsfunktionen der zweiten physischen elektronischen Vorrichtung (800) zu steuern.

3. XR-Rendering-Vorrichtung (100) nach Anspruch 2, wobei der kombinierte Satz von VUI-Elementen, die in der kombinierten VUI gerendert werden, mindestens eines der VUI-Elemente des ersten Satzes umfasst, die in der ersten virtuellen elektronischen Vorrichtung gerendert werden, und mindestens eines der VUI-Elemente des zweiten Satzes umfasst, die in der zweiten virtuellen elektronischen Vorrichtung gerendert werden.

4. XR-Rendering-Vorrichtung (100) nach einem der Ansprüche 1 bis 3, wobei die Anweisungen von dem mindestens einen Prozessor ausgeführt werden können, um ferner Operationen zu Folgendem durchzuführen:
Bestimmen, dass der kombinierte Satz von Betriebsfunktionen nur Betriebsfunktionen des ersten Satzes der ersten physischen elektronischen Vorrichtung (210) umfasst, die eine Ähnlichkeitsregel mit Betriebsfunktionen des zweiten Satzes der zweiten physischen elektronischen Vorrichtung (800) erfüllen.

5. XR-Rendering-Vorrichtung (100) nach einem der Ansprüche 1 bis 3, wobei die Anweisungen von dem mindestens einen Prozessor ausgeführt werden können, um ferner Operationen zu Folgendem durchzuführen:
Bestimmen, dass der kombinierte Satz von Betriebsfunktionen Betriebsfunktionen des ersten Satzes der ersten physischen elektronischen Vorrichtung (210) umfasst, die mit Betriebsfunktionen des zweiten Satzes der zweiten physischen elektronischen Vorrichtung (800) kompatibel sind.

6. XR-Rendering-Vorrichtung (100) nach einem der Ansprüche 1 bis 5, wobei die Anweisungen von dem mindestens einen Prozessor ausgeführt werden können, um ferner Operationen zu Folgendem durchzuführen:
Bestimmen, dass der kombinierte Satz von Betriebsfunktionen mindestens eine Funktion umfasst, die eine Betriebskombination mindestens einer Betriebsfunktion des ersten Satzes der ersten physischen elektronischen Vorrichtung (210) und mindestens einer Betriebsfunktion des zweiten Satzes der zweiten physischen elektronischen Vorrichtung (800) ist.

7. XR-Rendering-Vorrichtung (100) nach einem der Ansprüche 1 bis 6, wobei die Anweisungen von dem mindestens einen Prozessor ausgeführt werden können, um ferner Operationen zu Folgendem durchzuführen:
Empfangen einer Nachricht von der ersten physischen elektronischen Vorrichtung (210) und/oder der zweiten physischen elektronischen Vorrichtung (800), die gesteuert wird, mit der Angabe, welcher Inhalt in Reaktion auf die Steuerung angezeigt wird; und
Aktualisieren der kombinierten VUI so, dass sie Inhalt enthält, der darauf basiert, welcher Inhalt durch die Nachricht als der angegeben wird, der in Reaktion auf die Steuerung angezeigt werden soll.

8. XR-Rendering-Vorrichtung (100) nach Anspruch 7, wobei die Nachricht mindestens eines von Folgendem angibt:
eine Liste von Symbolen, die auf einer Benutzeroberfläche der ersten physischen elektronischen Vorrichtung (210) und/oder der zweiten physischen elektronischen Vorrichtung (800), die gesteuert wird, angezeigt werden;
eine Liste von Menüpunkten, die auf der Benutzeroberfläche der ersten physischen elektronischen Vorrichtung (210) und/oder der zweiten physischen elektronischen Vorrichtung (800), die gesteuert wird, angezeigt werden;
eine Angabe von Text und/oder grafischen Zeichen, die auf einer Benutzeroberfläche der ersten physischen elektronischen Vorrichtung (210) und/oder der zweiten physischen elektronischen Vorrichtung (800), die gesteuert wird, angezeigt werden.

9. XR-Rendering-Vorrichtung (100) nach einem der Ansprüche 1 bis 8, wobei die Operation zum Bestimmen des kombinierten Satzes von Betriebsfunktionen basierend auf dem ersten Satz von Betriebsfunktionen der ersten physischen elektronischen Vorrichtung (210) und basierend auf dem zweiten Satz von Betriebsfunktionen der zweiten physischen elektronischen Vorrichtung (800) Folgendes umfasst:
Auswählen von Betriebsfunktionen aus dem ersten und dem zweiten Satz basierend auf Richtlinien zum Kombinieren von Typen von Betriebsfunktionen.

10. XR-Rendering-Vorrichtung (100) nach einem der Ansprüche 1 bis 9, wobei die Operation zum Bestimmen des kombinierten Satzes von Betriebsfunktionen basierend auf dem ersten Satz von Betriebsfunktionen der ersten physischen elektronischen Vorrichtung (210) und basierend auf dem zweiten Satz von Betriebsfunktionen der zweiten physischen elektronischen Vorrichtung (800) Folgendes umfasst:
Auswählen von Betriebsfunktionen aus dem ersten und dem zweiten Satz basierend auf einem Identifizieren einer ersten Betriebsfunktion des ersten Satzes, die so funktioniert, dass sie Daten ausgibt, die zur Verarbeitung als Eingabe in eine zweite Betriebsfunktion des zweiten Satzes kompatibel sind;
Erzeugen einer ersten verknüpften Betriebsfunktion des kombinierten Satzes, die Daten, die von der ersten Betriebsfunktion des ersten Satzes ausgegeben werden, zum Eingang der zweiten Betriebsfunktion des zweiten Satzes leitet; und
basierend auf dem Identifizieren einer Interaktion des zweiten Teilnehmers mit einem VUI-Element des kombinierten Satzes, das der ersten verknüpften Betriebsfunktion des kombinierten Satzes zugeordnet ist,
Leiten von Daten, die von der ersten Betriebsfunktion des ersten Satzes ausgegeben werden, zum Eingang der zweiten Betriebsfunktion des zweiten Satzes und
Erzeugen eines Renderings in der kombinierten VUI basierend auf den Daten, die von der zweiten Betriebsfunktion ausgeben werden.

11. XR-Rendering-Vorrichtung (100) nach Anspruch 10, wobei die Operation zum Bestimmen des kombinierten Satzes von Betriebsfunktionen ferner Folgendes umfasst:
Auswählen von Betriebsfunktionen aus dem ersten und dem zweiten Satz basierend auf einem Identifizieren einer dritten Betriebsfunktion des ersten Satzes, die so funktioniert, dass sie Daten ausgibt, die übersetzt werden können, um zur Verarbeitung als Eingabe in eine vierte Betriebsfunktion des zweiten Satzes kompatibel zu werden;
Erzeugen einer zweiten verknüpften Betriebsfunktion des kombinierten Satzes, die Daten, die von der dritten Betriebsfunktion des ersten Satzes ausgegeben werden, zu einem Eingang einer Übersetzungsfunktion leitet, und Daten, die von der Übersetzungsfunktion ausgegeben werden, zum Eingang der vierten Betriebsfunktion des zweiten Satzes leitet; und
basierend auf dem Identifizieren einer Interaktion des zweiten Teilnehmers mit einem VUI-Element des kombinierten Satzes, das der zweiten verknüpften Betriebsfunktion des kombinierten Satzes zugeordnet ist,
Leiten von Daten, die von der dritten Betriebsfunktion des ersten Satzes ausgegeben werden, zum Eingang der Übersetzungsfunktion und Leiten von Daten, die von der Übersetzungsfunktion ausgegeben werden, zum Eingang der vierten Betriebsfunktion des zweiten Satzes; und
Erzeugen eines Renderings in der kombinierten VUI basierend auf den Daten, die von der vierten Betriebsfunktion ausgeben werden.

12. XR-Rendering-Vorrichtung (100) nach einem der Ansprüche 1 bis 11, wobei die Operation zum Erzeugen des Renderings der kombinierten virtuellen elektronischen Vorrichtung in der immersiven XR-Umgebung Folgendes umfasst:
Erhalten von Charakteristiken von UI-Elementen der ersten physischen elektronischen Vorrichtung (210) in Bezug auf Betriebsfunktionen des kombinierten Satzes;
Erhalten von Charakteristiken von UI-Elementen der zweiten physischen elektronischen Vorrichtung (800) in Bezug auf Betriebsfunktionen des kombinierten Satzes; und
Erzeugen des Renderings der kombinierten virtuellen elektronischen Vorrichtung in der immersiven XR-Umgebung basierend auf den erhaltenen Charakteristiken der UI-Elemente der ersten physischen elektronischen Vorrichtung (210) und der zweiten physischen elektronischen Vorrichtung (800).

13. XR-Rendering-Vorrichtung (100) nach einem der Ansprüche 1 bis 12, wobei die Anweisungen von dem mindestens einen Prozessor ausgeführt werden können, um ferner Operationen zu Folgendem durchzuführen:
Steuern basierend auf einem Sicherheitsmechanismus, welche Interaktionen der zweite Teilnehmer mit dem kombinierten Satz von VUI-Elementen in dem zweiten virtuellen Portalraum haben darf, um Betriebsfunktionen des kombinierten Satzes zu steuern.

14. XR-Rendering-Vorrichtung (100) nach Anspruch 13, wobei:
der Sicherheitsmechanismus definiert, welche VUI-Elemente des kombinierten Satzes vom zweiten Teilnehmer in dem zweiten virtuellen Portalraum ausgewählt werden können; und
der Sicherheitsmechanismus vom ersten Teilnehmer definiert wird.

15. Verfahren, das von einer Extended-Reality-Rendering-Vorrichtung, XR-Vorrichtung, (100) durchgeführt wird, zum Rendern einer immersiven XR-Umgebung auf Anzeigevorrichtungen zur Betrachtung durch einen ersten und einen zweiten Teilnehmer in der immersiven XR-Umgebung, wobei das Verfahren Folgendes umfasst:
Bestimmen (1112) eines kombinierten Satzes von Betriebsfunktionen basierend auf einem ersten Satz von Betriebsfunktionen einer ersten physischen elektronischen Vorrichtung (210) in einem ersten virtuellen Portalraum der immersiven XR-Umgebung und basierend auf einem zweiten Satz von Betriebsfunktionen einer zweiten physischen elektronischen Vorrichtung (800) in dem ersten virtuellen Portalraum oder einem zweiten virtuellen Portalraum der immersiven XR-Umgebung;
basierend auf dem Bestimmen, dass eine Regel zum Erzeugen einer kombinierten virtuellen elektronischen Vorrichtung erfüllt wurde, Erzeugen (1114) eines Renderings der kombinierten elektronischen Vorrichtung in der immersiven XR-Umgebung, wobei das Rendering der kombinierten virtuellen elektronischen Vorrichtung eine kombinierte virtuelle Benutzeroberfläche, VUI, mit einem kombinierten Satz von VUI-Elementen umfasst, mit denen der erste Teilnehmer in dem ersten virtuellen Portalraum interagieren kann, um Betriebsfunktionen des kombinierten Satzes zu steuern, und/oder mit denen der zweite Teilnehmer in dem zweiten virtuellen Portalraum interagieren kann, um Betriebsfunktionen des kombinierten Satzes zu steuern;
Erzeugen (1116) einer Zuordnung zwischen den Betriebsfunktionen des kombinierten Satzes und den VUI-Elementen des kombinierten Satzes;
Identifizieren (1118) einer Charakteristik einer Interaktion des zweiten Teilnehmers mit einem ersten VUI-Element des kombinierten Satzes;
Identifizieren (1120) basierend auf der Zuordnung, welche mindestens eine der Betriebsfunktionen des kombinierten Satzes dem ersten VUI-Element zugeordnet wird; und
basierend auf der identifizierten mindestens einen der Betriebsfunktionen des kombinierten Satzes Steuern (1122) mindestens einer der Betriebsfunktionen des ersten Satzes von Betriebsfunktionen der ersten physischen elektronischen Vorrichtung (210), die der identifizierten mindestens einen der Betriebsfunktionen des kombinierten Satzes entspricht, und/oder Steuern (1122) mindestens einer Betriebsfunktion des zweiten Satzes der zweiten physischen elektronischen Vorrichtung (800), die der identifizierten mindestens einen der Betriebsfunktionen des kombinierten Satzes entspricht.

## Revendications

1. Dispositif de rendu de réalité étendue, XR, (100) pour un rendu dans un environnement XR immersif sur des dispositifs d'affichage pour une visualisation par des premier et deuxième participants dans l'environnement XR immersif, le dispositif de rendu XR comprenant :
au moins un processeur (600) ; et
au moins une mémoire (610) stockant des instructions exécutables par l'au moins un processeur (600) pour réaliser des opérations pour :
déterminer un ensemble combiné de fonctions opérationnelles sur la base d'un premier ensemble de fonctions opérationnelles d'un premier dispositif électronique physique (210) dans un premier espace de portail virtuel de l'environnement XR immersif et sur la base d'un deuxième ensemble de fonctions opérationnelles d'un deuxième dispositif électronique physique (800) dans le premier espace de portail virtuel ou dans un deuxième espace de portail virtuel de l'environnement XR immersif ;
sur la base de la détermination qu'une règle est devenue satisfaite pour la génération d'un dispositif électronique virtuel combiné, générer un rendu du dispositif électronique virtuel combiné dans l'environnement XR immersif, dans lequel le rendu du dispositif électronique virtuel combiné comprend une interface utilisateur virtuelle, VUI, combinée avec un ensemble combiné d'éléments VUI avec lesquels le premier participant peut interagir dans le premier espace de portail virtuel pour commander des fonctions opérationnelles de l'ensemble combiné et/ou avec lesquels le deuxième participant peut interagir dans le deuxième espace de portail virtuel pour commander des fonctions opérationnelles de l'ensemble combiné ;
générer un mappage entre les fonctions opérationnelles de l'ensemble combiné et les éléments VUI de l'ensemble combiné ;
identifier une caractéristique d'une interaction du deuxième participant avec un premier élément VUI de l'ensemble combiné ;
identifier, sur la base du mappage, au moins l'une des fonctions opérationnelles de l'ensemble combiné qui est mappée avec le premier élément VUI ; et
sur la base de la caractéristique de l'interaction du deuxième participant avec le premier élément VUI de l'ensemble combiné et sur la base de l'au moins une fonction opérationnelle identifiée parmi les fonctions opérationnelles de l'ensemble combiné, commander au moins l'une des fonctions opérationnelles du premier ensemble de fonctions opérationnelles du premier dispositif électronique physique (210) correspondant à l'au moins une fonction opérationnelle identifiée parmi les fonctions opérationnelles de l'ensemble combiné et/ou commander au moins une fonction opérationnelle du deuxième ensemble du deuxième dispositif électronique physique (800) correspondant à l'au moins une fonction opérationnelle identifiée parmi les fonctions opérationnelles de l'ensemble combiné.

2. Dispositif de rendu XR (100) selon la revendication 1, dans lequel les instructions exécutables par l'au moins un processeur réalisent en outre des opérations pour :
définir le premier espace de portail virtuel à un emplacement dans un espace physique du premier participant ;
suivre un emplacement du premier dispositif électronique physique (210) par rapport à l'emplacement du premier espace de portail virtuel ;
définir le deuxième espace de portail virtuel à un emplacement dans un espace physique du deuxième participant ;
suivre un emplacement du deuxième dispositif électronique physique (800) par rapport à l'emplacement du deuxième espace de portail virtuel ;
sur la base de la détermination que le premier dispositif électronique physique (210) se trouve à l'intérieur du premier espace de portail virtuel, réaliser le rendu d'une représentation du premier dispositif électronique virtuel dans l'environnement XR immersif d'au moins une partie du premier dispositif électronique physique (210), dans lequel le rendu du premier dispositif électronique virtuel comprend une première VUI avec un premier ensemble d'éléments VUI avec lesquels le deuxième participant peut interagir dans le deuxième espace de portail virtuel de l'environnement XR immersif pour commander le premier ensemble de fonctions opérationnelles du premier dispositif électronique physique (210) ; et
sur la base de la détermination que le deuxième dispositif électronique physique (800) se trouve à l'intérieur du deuxième espace de portail virtuel, réaliser le rendu d'une représentation du deuxième dispositif électronique virtuel dans l'environnement XR immersif d'au moins une partie du deuxième dispositif électronique physique (800), dans lequel le rendu du deuxième dispositif électronique virtuel comprend une deuxième VUI avec un deuxième ensemble d'éléments VUI avec lesquels le premier participant peut interagir dans le premier espace de portail virtuel de l'environnement XR immersif pour commander le deuxième ensemble de fonctions opérationnelles du deuxième dispositif électronique physique (800).

3. Dispositif de rendu XR (100) selon la revendication 2, dans lequel l'ensemble combiné d'éléments VUI rendus dans le VUI combiné inclut au moins l'un des éléments VUI d'un premier ensemble rendu dans le premier dispositif électronique virtuel et inclut au moins l'un des éléments VUI du deuxième ensemble rendu dans le deuxième dispositif électronique virtuel.

4. Dispositif de rendu XR (100) selon l'une quelconque des revendications 1 à 3, dans lequel les instructions exécutables par l'au moins un processeur réalisent en outre des opérations pour :
déterminer l'ensemble combiné de fonctions opérationnelles pour inclure uniquement des fonctions opérationnelles du premier ensemble du premier dispositif électronique physique (210) qui satisfont à une règle de similarité à des fonctions opérationnelles du deuxième ensemble du deuxième dispositif électronique physique (800).

5. Dispositif de rendu XR (100) selon l'une quelconque des revendications 1 à 3, dans lequel les instructions exécutables par l'au moins un processeur réalisent en outre des opérations pour :
déterminer l'ensemble combiné de fonctions opérationnelles pour inclure des fonctions opérationnelles du premier ensemble du premier dispositif électronique physique (210) qui sont compatibles avec des fonctions opérationnelles du deuxième ensemble du deuxième dispositif électronique physique (800).

6. Dispositif de rendu XR (100) selon l'une quelconque des revendications 1 à 5, dans lequel les instructions exécutables par l'au moins un processeur réalisent en outre des opérations pour :
déterminer l'ensemble combiné de fonctions opérationnelles pour inclure au moins une fonction qui est une combinaison opérationnelle d'au moins une fonction opérationnelle du premier ensemble du premier dispositif électronique physique (210) et d'au moins une fonction opérationnelle du deuxième ensemble du deuxième dispositif électronique physique (800).

7. Dispositif de rendu XR (100) selon l'une quelconque des revendications 1 à 6, dans lequel les instructions exécutables par l'au moins un processeur réalisent en outre des opérations pour :
recevoir un message depuis le premier dispositif électronique physique (210) et/ou le deuxième dispositif électronique physique (800) qui est/sont commandé(s), indiquant le contenu qui est affiché en réponse à la commande ; et
mettre à jour la VUI combinée pour contenir un contenu qui est basé sur le contenu qui est indiqué par le message qui est affiché en réponse à la commande.

8. Dispositif de rendu XR (100) selon la revendication 7, dans lequel le message indique au moins l'une parmi :
une liste d'icônes affichées sur une interface utilisateur du premier dispositif électronique physique (210) et/ou du deuxième dispositif électronique physique (800) qui est/sont commandé(s) ;
une liste d'éléments de menu affichés sur l'interface utilisateur du premier dispositif électronique physique (210) et/ou du deuxième dispositif électronique physique (800) qui est/sont commandé(s) ;
une indication d'indices textuels et/ou graphiques affichés sur l'interface utilisateur du premier dispositif électronique physique (210) et/ou du deuxième dispositif électronique physique (800) qui est/sont commandé(s).

9. Dispositif de rendu XR (100) selon l'une quelconque des revendications 1 à 8, dans lequel l'opération pour déterminer l'ensemble combiné de fonctions opérationnelles sur la base du premier ensemble de fonctions opérationnelles du premier dispositif électronique physique (210) et sur la base du deuxième ensemble de fonctions opérationnelles du deuxième dispositif électronique physique (800) comprend :
sélectionner des fonctions opérationnelles parmi les premier et deuxième ensembles sur la base de politiques pour combiner des types de fonctions opérationnelles.

10. Dispositif de rendu XR (100) selon l'une quelconque des revendications 1 à 9, dans lequel l'opération pour déterminer l'ensemble combiné de fonctions opérationnelles sur la base du premier ensemble de fonctions opérationnelles du premier dispositif électronique physique (210) et sur la base du deuxième ensemble de fonctions opérationnelles du deuxième dispositif électronique physique (800) comprend :
sélectionner des fonctions opérationnelles parmi les premier et deuxième ensembles sur la base de l'identification d'une première fonction opérationnelle du premier ensemble qui fonctionne pour délivrer des données qui sont compatibles pour être traitées en tant qu'entrée dans une deuxième fonction opérationnelle du deuxième ensemble ;
générer une première fonction opérationnelle liée de l'ensemble combiné qui achemine des données délivrées par la première fonction opérationnelle du premier ensemble vers l'entrée de la deuxième fonction opérationnelle du deuxième ensemble ; et
sur la base de l'identification d'une interaction du deuxième participant avec un élément VUI de l'ensemble combiné qui est mappé avec la première fonction opérationnelle liée de l'ensemble combiné,
acheminer des données délivrées par la première fonction opérationnelle du premier ensemble vers l'entrée de la deuxième fonction opérationnelle du deuxième ensemble, et
générer, dans la VUI combinée, un rendu sur la base de données délivrées par la deuxième fonction opérationnelle.

11. Dispositif de rendu XR (100) selon la revendication 10, dans lequel l'opération pour déterminer l'ensemble combiné de fonctions opérationnelles comprend en outre :
sélectionner des fonctions opérationnelles parmi les premier et deuxième ensembles sur la base de l'identification d'une troisième fonction opérationnelle du premier ensemble qui fonctionne pour délivrer des données qui peuvent être traduites pour devenir compatibles en vue de leur traitement en tant qu'entrée dans une quatrième fonction opérationnelle du deuxième ensemble ;
générer une deuxième fonction opérationnelle liée de l'ensemble combiné qui achemine des données délivrées par la troisième fonction opérationnelle du premier ensemble vers une entrée d'une fonction de traduction, et achemine des données délivrées par la fonction de traduction vers l'entrée de la quatrième fonction opérationnelle du deuxième ensemble ; et
sur la base de l'identification d'une interaction du deuxième participant avec un élément VUI de l'ensemble combiné qui est mappé avec la deuxième fonction opérationnelle liée de l'ensemble combiné,
acheminer des données délivrées par la troisième fonction opérationnelle du premier ensemble vers l'entrée de la fonction de traduction, et acheminer des données délivrées par la fonction de traduction vers l'entrée de la quatrième fonction opérationnelle du deuxième ensemble, et
générer, dans la VUI combinée, un rendu sur la base de données délivrées par la quatrième fonction opérationnelle.

12. Dispositif de rendu XR (100) selon l'une quelconque des revendications 1 à 11, dans lequel l'opération pour générer un rendu du dispositif électronique virtuel combiné dans l'environnement XR immersif comprend :
obtenir des caractéristiques d'éléments UI du premier dispositif électronique physique (210) en relation avec des fonctions opérationnelles de l'ensemble combiné ;
obtenir des caractéristiques d'éléments UI du deuxième dispositif électronique physique (800) en relation avec des fonctions opérationnelles de l'ensemble combiné ; et
générer le rendu du dispositif électronique virtuel combiné dans l'environnement XR immersif sur la base des caractéristiques obtenues des éléments UI du premier dispositif électronique physique (210) et du deuxième dispositif électronique physique (800).

13. Dispositif de rendu XR (100) selon l'une quelconque des revendications 1 à 12, dans lequel les instructions exécutables par l'au moins un processeur réalisent en outre des opérations pour :
commander quelle interaction le deuxième participant est autorisé à avoir avec l'ensemble combiné d'éléments VUI dans le deuxième espace de portail virtuel pour commander des fonctions opérationnelles de l'ensemble combiné, sur la base d'un mécanisme de sécurité.

14. Dispositif de rendu XR (100) selon la revendication 13, dans lequel :
le mécanisme de sécurité définit quels éléments VUI de l'ensemble combiné peuvent être sélectionnés par le deuxième participant dans le deuxième espace de portail virtuel ; et
le mécanisme de sécurité est défini par le premier participant.

15. Procédé réalisé par un dispositif de rendu de réalité étendue, XR, (100) pour un rendu dans un environnement XR immersif sur des dispositifs d'affichage pour une visualisation par des premier et deuxième participants dans l'environnement XR immersif, le procédé comprenant :
la détermination (1112) d'un ensemble combiné de fonctions opérationnelles sur la base d'un premier ensemble de fonctions opérationnelles d'un premier dispositif électronique physique (210) dans un premier espace de portail virtuel de l'environnement XR immersif et sur la base d'un deuxième ensemble de fonctions opérationnelles d'un deuxième dispositif électronique physique (800) dans le premier espace de portail virtuel ou dans un deuxième espace de portail virtuel de l'environnement XR immersif ;
sur la base de la détermination qu'une règle est devenue satisfaite pour la génération d'un dispositif électronique virtuel combiné, la génération (1114) d'un rendu du dispositif électronique virtuel combiné dans l'environnement XR immersif, dans lequel le rendu du dispositif électronique virtuel combiné comprend une interface utilisateur virtuelle, VUI, combinée avec un ensemble combiné d'éléments VUI avec lesquels le premier participant peut interagir dans le premier espace de portail virtuel pour commander des fonctions opérationnelles de l'ensemble combiné et/ou avec lesquels le deuxième participant peut interagir dans le deuxième espace de portail virtuel pour commander des fonctions opérationnelles de l'ensemble combiné ;
la génération (1116) d'un mappage entre les fonctions opérationnelles de l'ensemble combiné et les éléments VUI de l'ensemble combiné ;
l'identification (1118) d'une caractéristique d'une interaction du deuxième participant avec un premier élément VUI de l'ensemble combiné ;
l'identification (1120), sur la base du mappage, d'au moins l'une des fonctions opérationnelles de l'ensemble combiné qui est mappée avec le premier élément VUI ; et
sur la base de l'au moins une fonction opérationnelle identifiée parmi les fonctions opérationnelles de l'ensemble combiné, la commande (1122) d'au moins l'une des fonctions opérationnelles du premier ensemble de fonctions opérationnelles du premier dispositif électronique physique (210) correspondant à l'au moins une fonction opérationnelle identifiée parmi les fonctions opérationnelles de l'ensemble combiné et/ou la commande (1122) d'au moins une fonction opérationnelle du deuxième ensemble du deuxième dispositif électronique physique (800) correspondant à l'au moins une fonction opérationnelle identifiée parmi les fonctions opérationnelles de l'ensemble combiné.
